(19) ...

Europäisches Patentamt

European Patent Office

Office européen des brevets

(11) **EP 4 447 512 A1**

(12) **EUROPEAN PATENT APPLICATION**
published in accordance with Art. 153(4) EPC

(43) Date of publication:
**16.10.2024 Bulletin 2024/42**

(21) Application number: **22918414.8**

(22) Date of filing: **22.12.2022**

(51) International Patent Classification (IPC):
***H04W 12/06*** (2021.01)

(52) Cooperative Patent Classification (CPC):
**H04W 12/06; H04W 12/122**

(86) International application number:
**PCT/CN2022/140938**

(87) International publication number:
**WO 2023/130971 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.01.2022 CN 202210011098**

(71) Applicant: **Huawei Technologies Co., Ltd.**
**Shenzhen, Guangdong 518129 (CN)**

(72) Inventors:
- **NEWTON, Christopher·J·P**
  **Guildford, Surrey GU2 7XH (GB)**

- **CHEN, Liqun**
  **Guildford, Surrey GU2 7XH (GB)**
- **LIU, Fei**
  **Shenzhen, Guangdong 518129 (CN)**
- **PARTHIPAN, Loganathan**
  **Guildford, Surrey GU2 7XH (GB)**
- **WANG, Donghui**
  **Shenzhen, Guangdong 518129 (CN)**
- **SONG, Yurong**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **TRUST METRIC INTEGRATED COMMUNICATION METHOD AND APPARATUS**

(57) This application provides a communication method integrated with trusted measurement and an apparatus. The method includes: A first network element sends a first request message, where the first request message is for requesting to verify whether terminal device is trusted. The first network element receives a first response message, where the first response message is for verifying whether the terminal device is trusted. According to the technical solutions provided in this application, remote attestation can be deployed between the first network element and the terminal device, to verify a trusted state of the terminal device. Further, security of a process of communication between the first network element and the terminal device is improved, and security of the first network element and the terminal device is improved.

FIG. 5

**Description**

This application claims priority to Chinese Patent Application No. 202210011098.5, filed with the China National Intellectual Property Administration on January 5, 2022 and entitled "COMMUNICATION METHOD INTEGRATED WITH TRUSTED MEASUREMENT AND APPARATUS", which is incorporated herein by reference in its entirety.

**TECHNICAL FIELD**

This application relates to the communication field, and more specifically, to a communication method integrated with trusted measurement and an apparatus.

**BACKGROUND**

After years of development, a mobile communication network has progressed to a 5th generation (5th generation, 5G) currently. When user equipment accesses a 5G network, a network service provider performs authentication on an identity of the user equipment. However, no mechanism has been established so far to ensure that the user equipment has not been tampered with or attest that the user equipment correctly runs. Once the user equipment is in an untrusted state, data in a communication process may be leaked, security of the communication process is to be threatened, and even security of the network service provider is affected. Therefore, a communication method needs to be urgently provided. When the user equipment accesses a network, whether the user equipment is trusted is verified, to ensure security of communication between the network and the equipment, and improve security of the network and the equipment.

**SUMMARY**

This application provides a communication method integrated with trusted measurement, so that a remote-attestation process can be integrated with an authentication process of terminal device, a trusted-attestation service can be provided for a core network element and the terminal device, and security of a communication process can be improved.

According to a first aspect, a communication method integrated with trusted measurement is provided, and includes: Terminal device receives a first request message, where the first request message is for requesting to verify whether the terminal device is trusted. The terminal device sends a first response message, where the first response message is for verifying whether the terminal device is trusted.

In this embodiment provided in this application, related signaling of remote attestation is deployed between a first network element, namely, a core network element, and the terminal device. The terminal device receives the first request message. The first request message triggers the terminal device to perform trusted measurement and generate the first response message used by the first network element to verify a trusted state of the terminal device. Further, security of a process of communication between the first network element and the terminal device is improved, and security of the first network element and the terminal device is improved. A remote-attestation process may be integrated with an authentication process of the first network element and the terminal device. The related signaling of the remote attestation is combined into interaction signaling of the authentication process, and no additional signaling needs to be added. This can reduce signaling overheads in the communication process, and improve security of the authentication process or a subsequent communication process.

With reference to the first aspect, in some implementations of the first aspect, the first request message includes a flag bit, and the flag bit is for triggering the terminal device to generate the first response message.

In this embodiment provided in this application, the first network element may not need to send a challenge value to the terminal device for the terminal device to generate the first response message, but the flag bit triggers the terminal device to generate the first response message. The challenge value may be agreed on by the first network element and the terminal device in advance, and stored in the terminal device. When the terminal device receives the first request message including the flag bit, the terminal device is triggered to generate the first response message based on the challenge value.

With reference to the first aspect, in some implementations of the first aspect, the first request message includes a challenge value.

In this embodiment provided in this application, the first request message includes the challenge value, so that a replay attack of the first request message can be prevented, and the terminal device can be triggered to generate the first response message used by the first network element to verify the trusted state of the terminal device, to improve security of the communication between the first network element and the terminal device, and improve the security of the first network element and the terminal device.

With reference to the first aspect, in some implementations of the first aspect, the challenge value includes a first challenge value and/or a second challenge value.

The first challenge value is generated by an access management network element; and/or the second challenge value is generated by an authentication server.

In this embodiment provided in this application, when the challenge value includes the first challenge value and the second challenge value, the terminal device generates the first response message based on the first challenge value and the second challenge value, and the access management network element and the authentication server separately verify the first response message, so that double security assurance can be provided for verification of the trusted state of the terminal device.

With reference to the first aspect, in some implementations of the first aspect, the first challenge value and/or the second challenge value are/is any one of an authentication random number, a trusted random number, a timestamp, and a value of an agreed field.

In this embodiment provided in this application, the authentication random number is a random number sequence RAND in an authentic vector generated by a data management network element in an authentication procedure. The trusted random number is a random number provided by a trusted third party trusted by both the terminal device and the first network element. The timestamp is clock information generated by a trusted clock, for example, a clock endorsed by using an endorser, trusted by both the terminal device and the first network element. The value of the agreed field is a value of a specific field that is in a data packet and that is agreed on by the terminal device and the first network element in advance. The first network element reuses the authentication random number, the trusted random number, the timestamp, or the value of the agreed field as the challenge value, and does not need to specially generate the challenge value to perform trusted measurement, so that resource overheads can be reduced.

With reference to the first aspect, in some implementations of the first aspect, the first challenge value is a first random number; and/or the second challenge value is a second random number.

In this embodiment provided in this application, the first random number and the second random number are respectively random numbers specially generated by the access management network element and the authentication server to perform trusted attestation on the terminal device, and are used by the first network element to initiate a verification request to the terminal device, to verify whether the terminal device is trusted, so that the security of the process of the communication between the first network element and the terminal device is improved, and the security of the first network element and the terminal device is improved.

With reference to the first aspect, in some implementations of the first aspect, the first response message includes attestation information, the attestation information includes a citation and a measurement log, the citation includes a digest of the measurement log, and the measurement log includes process information of performing trusted measurement by the terminal device.

In this embodiment provided in this application, the attestation information includes the citation and the measurement log, and the digest of the measurement log is obtained by performing hash computing on the measurement log, so that the first network element can perform integrity verification on the measurement log. This helps improve the security of the communication process.

With reference to the first aspect, in some implementations of the first aspect, the attestation information includes a measurement value, and the measurement value is trusted-state information of the terminal device.

In this embodiment provided in this application, the attestation information includes the measurement value, and the measurement value is obtained by performing an operation on the measurement log by a trusted computing platform of the terminal device, so that the first network element can verify the measurement log, and determine validity of the measurement log in the attestation information. Further, the security of the process of the communication between the first network element and the terminal device is improved.

With reference to the first aspect, in some implementations of the first aspect, the attestation information includes a trusted signature, and the trusted signature is a signature of the terminal device on the measurement value.

In this embodiment provided in this application, the attestation information includes the trusted signature, so that the first network element can perform signature verification on the trusted signature based on the corresponding challenge value, and determine that the trusted signature is generated by the terminal device based on the challenge value, thereby verifying the trusted state of the terminal device, to improve the security of the process of the communication between the first network element and the terminal device.

With reference to the first aspect, in some implementations of the first aspect, the trusted signature includes a first trusted signature or a second trusted signature, the first trusted signature is a signature of first terminal device on the measurement value, and the second trusted signature is a signature of second terminal device on the first trusted signature, where the terminal device includes the first terminal device and/or the second terminal device.

In this embodiment provided in this application, the second terminal device may sign the first trusted signature by using a private key of the second terminal device, to provide double security assurance for sending of the attestation information. In addition, when verifying the attestation information, the first network element needs to first verify the second trusted signature and then verify the first trusted signature, to perform double verification, so that the security of the communication process is further improved.

With reference to the first aspect, in some implementations of the first aspect, the first response message includes an attestation result, the attestation result includes one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

In this embodiment provided in this application, the terminal device may store an attestation result used by another verifier to verify the trusted state of the terminal device before the first network element initiates a challenge request to the terminal device. When receiving the first request message of the first network element, the terminal device sends the attestation result, and does not need to repeatedly generate attestation information, so that resource overheads are reduced.

According to a second aspect, a communication method integrated with trusted measurement is provided. The method may be performed by a first network element or a chip used in the first network element. For example, the first network element may be an access management network element and/or an authentication server. For example, the method is performed by the first network element. The method includes: The first network element sends a first request message, where the first request message is for requesting to verify whether terminal device is trusted. The first network element receives a first response message, where the first response message is for verifying whether the terminal device is trusted.

In this embodiment provided in this application, remote attestation is deployed between the first network element and the terminal device. To be specific, the first network element sends the first request message, to trigger the terminal device to perform trusted measurement and generate the first response message. The first response message is used by the first network element to verify a trusted state of the terminal device. Further, security of communication between the first network element and the terminal device is improved, and security of the first network element and the terminal device is improved. A remote-attestation process may be integrated with an authentication process of the first network element and the terminal device. Related information of the remote attestation is combined into interaction signaling of the authentication process, and no additional signaling needs to be added. This can reduce signaling overheads in a communication process, and improve security of the authentication process and a subsequent communication process.

With reference to the second aspect, in some implementations of the second aspect, the first network element receives a first reference message, where the first reference message includes a trusted-attestation reference value of the terminal device, and the first reference message is for verifying a trusted state of the terminal device.

In this embodiment provided in this application, the trusted-attestation reference value is a trusted-state standard value of the terminal device. After decrypting a trusted signature, the first network element compares an obtained measurement value with the trusted-attestation reference value, thereby verifying the trusted state of the terminal device, and further ensuring the security of the communication between the first network element and the terminal device.

With reference to the second aspect, in some implementations of the second aspect, the first network element generates the first request message.

In this embodiment provided in this application, the first network element generates the first request message based on an actual service requirement, to request to verify whether the terminal device is trusted, so that the remote attestation can be deployed between the first network element and the terminal device, the security of the communication between the first network element and the terminal device can be improved, and the security of the first network element and the terminal device can be improved.

With reference to the second aspect, in some implementations of the second aspect, the first network element generates the first request message in response to the first reference message.

In this embodiment provided in this application, the first reference message triggers the first network element to generate the first request message, to request to verify whether the terminal device is trusted, so that the remote attestation can be deployed between the first network element and the terminal device, the security of the communication between the first network element and the terminal device can be improved, and the security of the first network element and the terminal device can be improved.

With reference to the second aspect, in some implementations of the second aspect, the first request message includes a flag bit, and the flag bit is for triggering the terminal device to generate the first response message.

In this embodiment provided in this application, the first network element may not need to send a challenge value to the terminal device for the terminal device to generate the first response message, but the flag bit triggers the terminal device to generate the first response message. The challenge value may be agreed on by the first network element and the terminal device in advance, and stored in the terminal device. When the terminal device receives the first request message including the flag bit, the terminal device is triggered to generate the first response message based on the challenge value.

With reference to the second aspect, in some implementations of the second aspect, the first request message includes a challenge value, and the challenge value is used by the terminal device to generate the first response message.

In this embodiment provided in this application, the first request message includes the challenge value, so that a replay attack of the request information can be prevented, and the terminal device can generate the first response message, to verify whether the terminal device is trusted. In this way, the security of the communication between the first network element and the terminal device is improved, and the security of the first network element and the terminal device is improved.

With reference to the second aspect, in some implementations of the second aspect, the challenge value includes a first challenge value and/or a second challenge value.

With reference to the second aspect, in some implementations of the second aspect, the first challenge value is generated by an access management network element; and/or the second challenge value is generated by an authentication server.

In this embodiment provided in this application, when the challenge value includes the first challenge value and the second challenge value, the terminal device generates the first response message based on the first challenge value and the second challenge value, and the access management network element and the authentication server separately verify the first response message, so that double security assurance can be provided for verification of the trusted state of the terminal device.

With reference to the second aspect, in some implementations of the second aspect, the first challenge value and/or the second challenge value are/is any one of an authentication random number, a trusted random number, a timestamp, and a value of an agreed field.

In this embodiment provided in this application, the first network element reuses the authentication random number, the trusted random number, the timestamp, or the value of the agreed field as the challenge value, and does not need to additionally generate the challenge value, so that resource overheads can be reduced.

With reference to the first aspect, in some implementations of the first aspect, the first challenge value is a first random number; and/or the second challenge value is a second random number.

In this embodiment provided in this application, the first random number and the second random number are respectively random numbers specially generated by the access management network element and the authentication server to perform trusted attestation on the terminal device, and are used by the first network element to initiate a verification request to the terminal device, to verify whether the terminal device is trusted, so that the security of the process of the communication between the first network element and the terminal device is improved, and the security of the first network element and the terminal device is improved.

With reference to the second aspect, in some implementations of the second aspect, the access management network element and/or the authentication server verify/verifies the first response message, where the first network element includes the access management network element and/or the authentication server.

In this embodiment provided in this application, the access management network element and the authentication server may jointly verify attestation information of the terminal device, to perform double verification, so that better assurance is provided for the security of the communication between the first network element and the terminal device, and the security of the first network element and the terminal device is improved.

With reference to the second aspect, in some implementations of the second aspect, attestation information includes a citation and a measurement log, the citation includes a digest of the measurement log, and the measurement log includes process information of performing trusted measurement by the terminal device.

In this embodiment provided in this application, the attestation information includes the citation and the measurement log, and the digest of the measurement log is obtained by performing hash computing on the measurement log, so that the first network element can perform integrity verification on the measurement log. This helps improve the security of the communication process and improve the security of the first network element and the terminal device.

With reference to the second aspect, in some implementations of the second aspect, the attestation information includes a measurement value, and the measurement value is trusted-state information of the terminal device.

In this embodiment provided in this application, the attestation information includes the measurement value, and the measurement value is obtained by performing an operation on the measurement log by a trusted computing platform of the terminal device, so that the first network element can verify the measurement log, and determine validity of the measurement log in the attestation information. Further, the security of the process of the communication between the first network element and the terminal device is improved, and the security of the first network element and the terminal device is improved.

With reference to the second aspect, in some implementations of the second aspect, the attestation information includes a trusted signature, the trusted signature is a signature of the terminal device on the measurement value, and the measurement value is the trusted-state information of the terminal device.

In this embodiment provided in this application, the attestation information includes the trusted signature, so that the first network element can perform signature verification on the trusted signature based on the corresponding challenge value, and determine that the trusted signature is generated by the terminal device based on the challenge value, thereby verifying the trusted state of the terminal device, to improve the security of the process of the communication between the first network element and the terminal device, and improve the security of the first network element and the terminal device.

With reference to the second aspect, in some implementations of the second aspect, the trusted signature includes a first trusted signature or a second trusted signature, the first trusted signature is a signature of first terminal device on the measurement value, and the second trusted signature is a signature of second terminal device on the first trusted signature, where the terminal device includes the first terminal device and/or the second terminal device.

In this embodiment provided in this application, the second terminal device may sign the first trusted signature by using a private key of the second terminal device, to provide double security assurance for sending of the attestation information. In addition, when verifying the attestation information, the first network element needs to first verify the second trusted signature and then verify the first trusted signature, to perform double verification, so that the security of the communication process is further improved, and the security of the first network element and the terminal device is improved.

With reference to the second aspect, in some implementations of the second aspect, the first response message includes an attestation result, the attestation result includes one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

In this embodiment provided in this application, the terminal device may store an attestation result used by another verifier to verify the trust state of the terminal device. When the first request message of the first network element is received, the attestation result is sent, and repeated verification does not need to be performed, so that resource overheads are reduced.

According to a third aspect, a communication method integrated with trusted measurement is provided, and includes: Terminal device sends a first response message, where the first response message is for verifying whether the terminal device is trusted.

In this embodiment provided in this application, the terminal device does not need to receive a first request message, and actively triggers generation of the first response message, so that signaling overheads can be reduced, and an air interface resource can be saved.

With reference to the third aspect, in some implementations of the third aspect, generation of the first response message is triggered based on a timing mechanism, a counting mechanism, or an event triggering mechanism.

In this embodiment provided in this application, the timing mechanism, the counting mechanism, or the event triggering mechanism triggers the terminal device to actively generate the first response message. That is, when a timer performs timing to agreed time, a counter counts to an agreed value, or a preset event occurs, the terminal device is triggered to actively generate the first response information, so that the signaling overheads can be reduced, and the air interface resource can be saved.

With reference to the third aspect, in some implementations of the third aspect, the first response message includes attestation information, the first response message is generated by the terminal device based on a challenge value, and the challenge value is any one of an authentication random number, a trusted random number, and a timestamp.

In this embodiment provided in this application, the challenge value may be stored in the terminal device in advance, and the terminal device is triggered based on the timing mechanism or the counting mechanism to actively generate the attestation information based on the challenge value, so that the signaling overheads can be reduced, and the air interface resource can be saved.

With reference to the third aspect, in some implementations of the third aspect, the attestation information includes a citation and a measurement log, the citation includes a digest of the measurement log, and the measurement log includes process information of performing trusted measurement by the terminal device.

In this embodiment provided in this application, the attestation information includes the citation and the measurement log, and the digest of the measurement log is obtained by performing hash computing on the measurement log, so that the first network element can perform integrity verification on the measurement log. This helps improve security of a process of communication between the first network element and the terminal device and improve security of the first network element and the terminal device.

With reference to the third aspect, in some implementations of the third aspect, the attestation information includes a measurement value, and the measurement value is trusted-state information of the terminal device.

In this embodiment provided in this application, the attestation information includes the measurement value, and the measurement value is obtained by performing an operation on the measurement log by a trusted computing platform of the terminal device, so that the first network element can verify the measurement log, and determine validity of the measurement log in the attestation information. Further, the security of the process of the communication between the first network element and the terminal device is improved, and the security of the first network element and the terminal device is improved.

With reference to the third aspect, in some implementations of the third aspect, the attestation information includes a trusted signature, and the trusted signature is a signature of the terminal device on the measurement value.

In this embodiment provided in this application, the attestation information includes the trusted signature, so that the first network element can perform signature verification on the trusted signature based on the corresponding challenge value, and determine that the trusted signature is generated by the terminal device based on the challenge value, thereby verifying a trusted state of the terminal device, to improve the security of the process of the communication between the first network element and the terminal device, and improve the security of the first network element and the terminal device.

With reference to the third aspect, in some implementations of the third aspect, the trusted signature includes a first trusted signature or a second trusted signature, the first trusted signature is a signature of first terminal device on the measurement value, and the second trusted signature is a signature of second terminal device on the first trusted signature, where the terminal device includes the first terminal device and/or the second terminal device.

In this embodiment provided in this application, the second terminal device may sign the first trusted signature by using a private key of the second terminal device, to provide double security assurance for sending of the attestation information. In addition, when verifying the attestation information, the first network element needs to first verify the second trusted signature and then verify the first trusted signature, to perform double verification, so that the security of the communication process is further improved, and the security of the first network element and the terminal device is improved.

With reference to the third aspect, in some implementations of the third aspect, the first response message includes an attestation result, the attestation result includes one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

In this embodiment provided in this application, the terminal device may store an attestation result used by another verifier to verify the trust state of the terminal device. When the first request message of the first network element is received, the attestation result is sent, and repeated verification does not need to be performed, so that resource overheads are reduced.

According to a fourth aspect, a communication method integrated with trusted measurement is provided. The method may be performed by a second network element or a chip used in the second network element. For example, the second network element may be a data management network element or an equipment identity register. For example, the method is performed by the second network element. The method includes: The second network element obtains a first reference message, where the first reference message includes a trusted-attestation reference value, and the first reference message is used by a first network element to verify a trusted state of terminal device.

In this embodiment provided in this application, a function of collecting and storing reference information for verifying whether the terminal device is trusted is deployed on a second network element side, so that a function of the second network element is extended, and a verification credential can be provided for the first network element, to improve security of communication between the first network element and the terminal device, and improve security of the first network element and the terminal device.

With reference to the fourth aspect, in some implementations of the fourth aspect, the second network element sends the first reference message to the first network element.

In this embodiment provided in this application, the second network element provides a trusted-attestation reference value for the first network element. The trusted-attestation reference value is a trusted-state standard value of the terminal device. After decrypting a trusted signature, the first network element compares an obtained measurement value with the trusted-attestation reference value, thereby verifying the trusted state of the terminal device, further ensuring the security of the communication between the first network element and the terminal device, and improving the security of the first network element and the terminal device.

With reference to the fourth aspect, in some implementations of the fourth aspect, the first network element is an access management network element or an authentication server, and the second network element is any one of a data management network element, an authentication credential repository and processing function network element, or an equipment identity register.

In this embodiment provided in this application, a function of collecting and storing trusted-attestation reference information is deployed for a network element, for example, the data management network element, that has a storage function, so that a function of the data management network element is extended, and the verification credential can be provided for the first network element, to improve the security of the communication between the first network element and the terminal device, and improve the security of the first network element and the terminal device.

According to a fifth aspect, a communication apparatus integrated with trusted measurement is provided, and includes: a receiving unit, configured to receive a first request message, where the first request message is for requesting to verify whether terminal device is trusted; and a sending unit, configured to send a first response message, where the first response message is for verifying whether the terminal device is trusted.

With reference to the fifth aspect, in some implementations of the fifth aspect, the first request message includes a challenge value.

With reference to the fifth aspect, in some implementations of the fifth aspect, the challenge value includes a first challenge value and/or a second challenge value.

With reference to the fifth aspect, in some implementations of the fifth aspect, the first challenge value and/or the second challenge value are/is any one of an authentication random number, a trusted random number, a timestamp, and a value of an agreed field.

With reference to the fifth aspect, in some implementations of the fifth aspect, attestation information includes a trusted signature, the trusted signature is a signature of the terminal device on a measurement value, and the measurement value is trusted-state information of the terminal device.

With reference to the fifth aspect, in some implementations of the fifth aspect, the trusted signature includes a first trusted signature or a second trusted signature, the first trusted signature is a signature of first terminal device on the measurement value, and the second trusted signature is a signature of second terminal device on the first trusted signature, where the terminal device includes the first terminal device and/or the second terminal device.

According to a sixth aspect, a communication apparatus integrated with trusted measurement is provided, and includes: a sending unit, configured to send a first request message, where the first request message is for requesting to verify whether terminal device is trusted; and a receiving unit, configured to receive a first response message, where the first response message is for verifying whether the terminal device is trusted.

With reference to the sixth aspect, in some implementations of the sixth aspect, the receiving unit is further configured to receive a first reference message, where the first reference message includes a trusted-attestation reference value of the terminal device, and the first reference message is for verifying a trusted state of the terminal device.

With reference to the sixth aspect, in some implementations of the sixth aspect, a processing unit is configured to generate the first request message.

With reference to the sixth aspect, in some implementations of the sixth aspect, the processing unit is configured to generate the first request message in response to the first reference message.

With reference to the sixth aspect, in some implementations of the sixth aspect, the first request message includes a challenge value, and the challenge value is used by the terminal device to generate attestation information.

With reference to the sixth aspect, in some implementations of the sixth aspect, the challenge value includes a first challenge value and/or a second challenge value.

With reference to the sixth aspect, in some implementations of the sixth aspect, the first challenge value is generated by an access management network element; and/or the second challenge value is generated by an authentication server.

With reference to the sixth aspect, in some implementations of the sixth aspect, the first challenge value and/or the second challenge value are/is any one of an authentication random number, a trusted random number, a timestamp, and a value of an agreed field.

With reference to the sixth aspect, in some implementations of the sixth aspect, a first network element includes the access management network element and/or the authentication server.

With reference to the sixth aspect, in some implementations of the sixth aspect, the processing unit is used by the first network element to verify the attestation information.

With reference to the sixth aspect, in some implementations of the sixth aspect, the attestation information includes a trusted signature, the trusted signature is a signature of the terminal device on a measurement value, and the measurement value is trusted-state information of the terminal device.

With reference to the sixth aspect, in some implementations of the sixth aspect, the trusted signature includes a first trusted signature or a second trusted signature, the first trusted signature is a signature of first terminal device on the measurement value, and the second trusted signature is a signature of second terminal device on the first trusted signature, where the terminal device includes the first terminal device and/or the second terminal device.

According to a seventh aspect, a communication apparatus integrated with trusted measurement is provided, and includes: an obtaining unit, configured to obtain a first reference message, where the first reference message includes a trusted-attestation reference value, and the first reference message is used by a first network element to verify whether terminal device is trusted.

With reference to the seventh aspect, in some implementations of the seventh aspect, a sending unit is configured to send the first reference message.

With reference to the seventh aspect, in some implementations of the seventh aspect, the first network element is an access management network element or an authentication server, and the second network element is any one of a data management network element, an authentication credential repository and processing function network element, or an equipment identity register.

According to an eighth aspect, a communication system is provided. The system includes the apparatus according to any one of the possible implementations in the apparatus according to any one of the fifth aspect or the possible implementations of the fifth aspect, the apparatus according to any one of the sixth aspect or the possible implementations of the sixth aspect, and the apparatus according to any one of the seventh aspect or the possible implementations of the seventh aspect.

According to a ninth aspect, a computer program product is provided. The computer program product includes a computer program or a group of instructions. When the computer program or the group of instructions are run by a computer, the methods according to any one of the first aspect or the possible implementations of the first aspect, any one of the second aspect or the possible implementations of the second aspect, any one of the third aspect or the possible implementations of the third aspect, and any one of the fourth aspect or the possible implementations of the fourth aspect are enabled to be performed.

According to a tenth aspect, a computer-readable medium is provided, and is configured to store a computer program. The computer program includes instructions for performing the methods according to any one of the first aspect or the possible implementations of the first aspect, any one of the second aspect or the possible implementations of the second aspect, any one of the third aspect or the possible implementations of the third aspect, and any one of the fourth aspect or the possible implementations of the fourth aspect.

According to an eleventh aspect, a chip is provided, and includes a processor, configured to invoke, from a memory, and run instructions stored in the memory, so that a communication device in which the chip is installed performs the methods according to any one of the first aspect or the possible implementations of the first aspect, any one of the second aspect or the possible implementations of the second aspect, any one of the third aspect or the possible implementations of the third aspect, and any one of the fourth aspect or the possible implementations of the fourth aspect.

In a possible implementation, the processor and the memory are integrated together.

In another possible implementation, the memory is located outside the communication apparatus.

The communication apparatus further includes a communication interface. The communication interface is used by the communication apparatus to communicate with another device, for example, send or receive data and/or a signal. For example, the communication interface may be a transceiver, a circuit, a bus, a module, or a communication interface of another type.

According to a twelfth aspect, an embodiment of this application further provides a communication apparatus. The apparatus includes at least one processor and an interface circuit. The interface circuit is used by the at least one processor to obtain a program or instructions in at least one memory. The at least one processor is configured to execute the program or the instructions to enable the communication apparatus to perform the method according to any one of the first aspect or the possible implementations of the first aspect.

According to a thirteenth aspect, an embodiment of this application further provides a communication apparatus. The apparatus includes at least one processor and an interface circuit. The interface circuit is used by the at least one processor to obtain a program or instructions in at least one memory. The at least one processor is configured to execute the program or the instructions to enable the communication apparatus to perform the method according to any one of the second aspect or the possible implementations of the second aspect.

According to a fourteenth aspect, an embodiment of this application further provides a communication apparatus. The apparatus includes at least one processor and an interface circuit. The interface circuit is used by the at least one processor to obtain a program or instructions in at least one memory. The at least one processor is configured to execute the program or the instructions to enable the communication apparatus to perform the method according to any one of the third aspect or the possible implementations of the third aspect.

According to a fifteenth aspect, an embodiment of this application further provides a communication apparatus. The apparatus includes at least one processor and an interface circuit. The interface circuit is used by the at least one processor to obtain a program or instructions in at least one memory. The at least one processor is configured to execute the program or the instructions to enable the communication apparatus to perform the method according to any one of the fourth aspect or the possible implementations of the fourth aspect.

**BRIEF DESCRIPTION OF DRAWINGS**

FIG. 1 is a diagram of a communication network architecture applicable to an embodiment of this application;
FIG. 2 is a diagram of an application scenario according to an embodiment of this application;
FIG. 3 is a diagram of interaction in an authentication process to which an embodiment of this application is applicable;
FIG. 4 is a diagram of interaction in another authentication process to which an embodiment of this application is applicable;
FIG. 5 is a diagram of interaction in a communication method integrated with trusted measurement according to an embodiment of this application;

FIG. 6 is a diagram of interaction in another communication method integrated with trusted measurement according to an embodiment of this application;

FIG. 7 is a diagram of interaction in still another communication method integrated with trusted measurement according to an embodiment of this application;

FIG. 8 is a diagram of interaction in still another communication method integrated with trusted measurement according to an embodiment of this application;

FIG. 9 is a diagram of interaction in still another communication method integrated with trusted measurement according to an embodiment of this application;

FIG. 10 is a diagram of interaction in still another communication method integrated with trusted measurement according to an embodiment of this application;

FIG. 11 is a diagram of interaction in still another communication method integrated with trusted measurement according to an embodiment of this application;

FIG. 12 is a diagram of interaction in still another communication method integrated with trusted measurement according to an embodiment of this application;

FIG. 13 is a diagram of interaction in still another communication method integrated with trusted measurement according to an embodiment of this application;

FIG. 14 is a diagram of a communication apparatus according to an embodiment of this application;

FIG. 15 is a diagram of another communication apparatus according to an embodiment of this application;

FIG. 16 is a diagram of still another communication apparatus according to an embodiment of this application; and

FIG. 17 is a diagram of still another communication apparatus according to an embodiment of this application.

## DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a future 6th generation (6th generation, 6G) system.

Terminal device in embodiments of this application may be user equipment, an access terminal, a subscriber unit, a subscriber station, a mobile station, a remote station, a remote terminal, mobile equipment, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, terminal device in a communication network such as a 5G network and a future 6G network, terminal device in a public land mobile network (public land mobile network, PLMN), or the like. This is not limited in embodiments of this application.

A network element in embodiments of this application may be a device configured to communicate with the terminal device. The network element may be a base transceiver station (base transceiver station, BTS) in the global system for mobile communications (global system for mobile communications, GSM) system or code division multiple access (code division multiple access, CDMA), a NodeB (NodeB, NB) in the wideband code division multiple access (wideband code division multiple access, WCDMA) system, an evolved NodeB (evolved NodeB, eNB or eNodeB) in the LTE system, or a radio controller in a cloud radio access network (cloud radio access network, CRAN) scenario. Alternatively, the network device may be a relay station, an access point, a vehicle-mounted device, a wearable device, a network device in a communication network such as the future 6G network, a network device or a functional unit in the PLMN network, or the like. This is not limited in embodiments of this application.

In this application, "indicate" may include "directly indicate" and "indirectly indicate". When a piece of indication information is described as indicating A, the indication information may directly indicate A or indirectly indicate A, but it does not indicate that the indication information necessarily carries A. In embodiments of this application, descriptions such as "when..." and "if" all mean that the device performs corresponding processing in an objective case, and are not for limiting time, and the device is not required to perform a determining action during implementation. This does not mean that there is another limitation either.

In embodiments of this application, unless otherwise specified, a quantity of nouns represents "a singular noun or a plural noun", namely, "one or more". "At least one" means one or more, "a plurality of" means two or more, and "a plurality of" in "one or more" means two or more similar types. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following" or a similar expression thereof refers to any combination of these items, including a singular item or any combination of plural items. For example, at least one of a, b, or c represents: a, b, c, a and b, a and c, b and c, or a, b, and c, where a, b, and c may be singular or plural.

A client and a server in embodiments of this application may be the foregoing terminal device or network device. This is not limited in embodiments of this application.

To facilitate understanding of embodiments of this application, concepts in this application are first briefly described.

1. Trusted computing (trusted computing, TC) is a technology aimed at enabling a computer to keep running in an expected manner. "Trusted" emphasizes that a behavior result is predictable and controllable. The trusted computing is enforced by computer hardware and software. A trusted technology of a computing system develops to trust in a hardware platform, an operating system, and an application by using a trusted root as a start. Management and authentication strength of each layer corresponds to trustworthiness of the layer. Further, trust is extended to a complete computer system, and protection measures are taken to ensure integrity of a computer resource and expected computer behavior, to improve trustworthiness of the computer system.

As the trusted computing has developed so far, two different research directions are currently generated. One is to use a physical tamper-resistant device to ensure that a trusted computing base (trusted computing base, TCB) is trusted and use the TCB as a trust anchor to construct a trusted computing system of the computer system. The other is to construct an isolated computing system to ensure trustworthiness of a running environment of specific sensitive software code. A universal trusted execution environment (trusted execution environment, TEE) based on a special security mode of a central processing unit (central processing unit, CPU) is developed by using this idea as evolution.

Remote attestation (remote attestation, RA) is one of key technologies in an overall solution of the trusted computing, and is for determining a trustworthiness status of a device. The remote attestation enables a user or other people to detect a change of a computer of the user, so that sending of private information or an important command to an insecure or security-impaired computer can be avoided. In a remote-attestation mechanism, a certificate is generated through hardware, to declare some software that is running. The user may send the certificate to a remote party to indicate that the computer of the user has not been tampered with. The remote attestation is usually combined with public-key encryption to ensure that sent information can be read only by a program that sends an attestation requirement rather than another unauthorized user. These restrictions enhance terminal trustworthiness and system security. Currently, the following several solutions are mainly used for a remote-attestation technology:

(1) Privacy certificate authority (privacy certificate authority, PCA): A verifier sends a challenge to a trusted computing platform (trusted platform module, TPM), in other words, requests content of one or more platform configuration registers (platform configuration registers, PCRs). A platform collects a storage measurement log file, and the TPM uses an identity key to sign the content of the PCR. The platform sends, to a certificate authority (certificate authority, CA), a message for requesting a platform certificate, and then sends the platform certificate, a storage measurement log (event log), and a signed PCR to the verifier. The verifier attests a request, in other words, recomputes the storage measurement log, and compares the storage measurement log with a received measurement value (a PCR value), to verify the platform certificate and a signature.

(2) Direct anonymous attestation (direct anonymous attestation, DAA): A TPM selects a piece of secret information, and obtains a DAA certificate signed and issued by a DAA issuer (issuer) for the secret information through a secure "zero-knowledge proof". A verifier (verifier) (also referred to as a challenger) attests, through a "zero-knowledge proof", that the TPM has a valid DAA certificate.

(3) Intel software guard extensions (Intel software guard extensions, Intel SGX) cross-platform verification: An SGX technology enables a developer to allocate the application to a CPU-enhanced enclave (enclave) or an executable guard area in a memory, so that security can be improved even on an attacked platform. An Intel SGX solution is approximately as follows: An attested enclave (enclave) obtains current information to generate a report structure, uses a report key of a quote enclave (quote enclave) to generate a tag, and sends the tag to the quote enclave. The quote enclave encapsulates the received report structure into a quote structure and signs by using a signature key depending on whether the attested enclave is verified to be on a same platform (for example, a same device) as the quote enclave. A target enclave verifies whether a quote (quote) is generated by a reliable Intel processor.

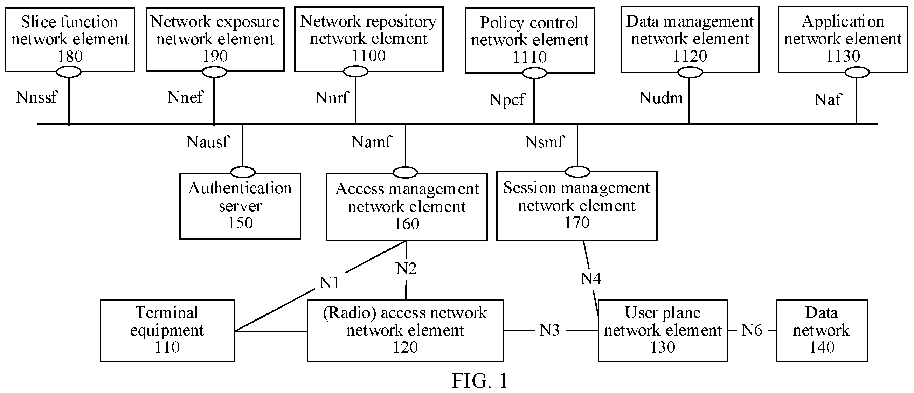

FIG. 1 is a diagram of a communication network architecture applied to an embodiment of this application. As shown in FIG. 1, the following separately describes parts in the network architecture.

Terminal device (terminal equipment) 110 is an ingress for a mobile user to interact with a network, can provide a basic computing capability and storage capability, display a service window to the user, and accept an operation input of the user; and may include various handheld devices, vehicle-mounted devices, wearable devices, computing devices that have a wireless communication function, or other processing devices connected to a wireless modem, and terminals in various forms, such as a mobile station (mobile station, MS), a terminal (terminal), user equipment (user equipment, UE), and a software terminal, for example, a water meter, an electricity meter, and a sensor.

A (radio) access network ((radio) access network, (R)AN) network element 120 is configured to provide a network access function for authorized terminal device in a specific area, and can use transmission tunnels with different quality based on a level of the terminal device, a service requirement, and the like.

The (R)AN network element can manage a radio resource, and provide an access service for the terminal device, to complete forwarding of a control signal and terminal device data between the terminal device and a core network. The (R)AN network element may also be understood as a base station in a conventional network.

A user plane (user plane) network element 130 is for packet routing and forwarding, quality of service (quality of service, QoS) handling on user plane data, and the like.

In a 5G communication system, the user plane network element may be a user plane function (user plane function, UPF) network element. In a future communication system, the user plane network element may still be the UPF network element, or may have another name. This is not limited in this application.

A data network (data network, DN) 140 is a data network that provides a service for a user. Generally, a client is located in the UE, and a server is located in the data network. The data network may be a private network such as a local area network, an external network, for example, the Internet, that is not managed and controlled by an operator; or a dedicated network, for example, a network that provides an IMS service, that is jointly deployed by operators.

In the future communication system, a DN in a 5G communication system may still be used, or an entity with a similar function may be replaced with another name. This is not limited in this application.

An authentication server (authentication server) 150 is for an authentication service and key generation for bidirectional authentication on the terminal device, and supports a unified authentication framework.

In the 5G communication system, the authentication server may be an authentication server function (authentication server function, AUSF) network element. In the future communication system, the authentication server function network element may still be the AUSF network element, or may have another name. This is not limited in this application.

An access management (access management) network element 160 is mainly for mobility management, access management, and the like, and may be configured to implement a function, for example, access authorization/authentication, other than session management in functions of a mobility management entity (mobility management entity, MME).

In the 5G communication system, the access management network element may be an access and mobility management function (access and mobility management function, AMF) network element. In the future communication system, the access management network element may still be the AMF network element, or may have another name. This is not limited in this application.

A session management (session management) network element 170 is mainly for session management, Internet protocol (Internet protocol, IP) address assignment and management of the terminal device, selection of a manageable user plane function, a termination point of a policy control and charging function interface, downlink data notification, and the like.

In the 5G communication system, the session management network element may be a session management function (session management function, SMF) network element. In the future communication system, the session management network element may still be the SMF network element, or may have another name. This is not limited in this application.

A slice selection (slice selection) network element 180 is configured to select a group of network slice instances that serve the terminal device, and determine a group of access management network elements that serve the terminal device.

In the 5G communication system, the network exposure network element may be a network slice selection function (network slice selection function, NSSF) network element. In the future communication system, the network exposure network element may still be the NSSF network element, or may have another name. This is not limited in this application.

A network exposure (network exposure) network element 190 is configured to expose a network capability to a third-party application, and can implement friendly interconnection between the network capability and a service requirement.

In the 5G communication system, the network exposure network element may be a network exposure function (network exposure function, NEF) network element. In the future communication system, the network exposure network element may still be the NEF network element, or may have another name. This is not limited in this application.

A network repository (network repository) network element 1100 is configured to maintain real-time information of all network function services in a network.

In the 5G communication system, the network repository network element may be a network registration function (network repository function, NRF) network element. In the future communication system, the network repository network element may still be the NRF network element, or may have another name. This is not limited in this application.

A policy control (policy control) network element 1110 is configured to provide a unified policy framework for guiding network behavior, provide policy rule information for a control plane function network element (for example, the AMF or SMF network element), and so on.

In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

A data management (data management) network element 1120 is for processing of terminal device identifier, access authentication, registration, mobility management, and the like.

In the 5G communication system, the data management network element may be a unified data management (unified data management, UDM) network element. In the future communication system, the unified data management may still be the UDM network element, or may have another name. This is not limited in this application.

An application (application) network element 1130 is configured to perform application-affected data routing, access a network, interact with a policy framework to perform policy control, and so on.

In the 5G communication system, the application network element may be an application function (application function, AF) network element. In the future communication system, the application network element may still be the AF network element, or may have another name. This is not limited in this application.

It may be understood that the foregoing network elements or the functions may be network elements in a hardware device, software functions running on dedicated hardware, or virtualized functions instantiated on a platform (for example, a cloud platform). One or more services may be obtained through division of the foregoing network elements or the functions. Further, a service that exists independently of a network function may occur.

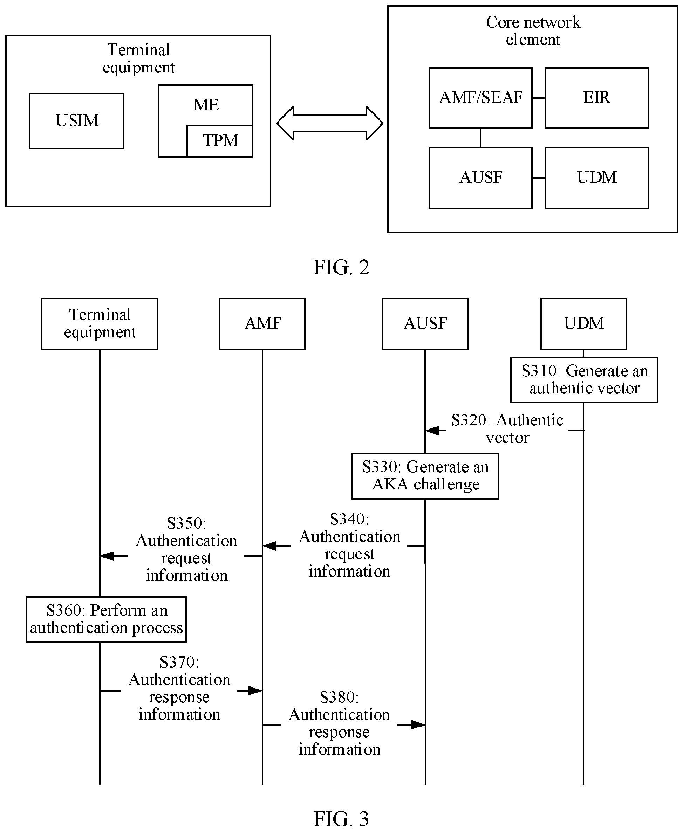

FIG. 2 shows an application scenario of a mobile communication network according to an embodiment of this application. For example, terminal device may include a universal subscriber identity module (universal subscriber identity module, USIM) and mobile equipment (mobile equipment, ME). The mobile equipment may be equipped with a TPM. The TPM may be configured to collect trusted-attestation information (an attestation evidence), perform attestation signature, generate trusted-response information, and so on. The figure merely shows an example in which the terminal device includes the USIM and the ME, and the ME is equipped with the TPM. The ME may alternatively be other terminal device such as an access terminal, a cordless phone, or a vehicle-mounted device, and the ME may be equipped with another trusted-computing module such as an SGX. The USIM may alternatively be other terminal device or function module that can provide security assurance such as a signature, and a device or a module derived from a future communication development process. This is not limited in this application. Similarly, a core network element may alternatively include a network element having a similar function other than an access management function AMF network element, an authentication server function AUSF network element, a security anchor function (security anchor function, SEAF) network element, a data management function UDM network element, and an equipment identity register (equipment identity register, EIR), or another network element having the similar function in a future communication network. This is not limited in this application.

FIG. 3 is a diagram of interaction in an authentication process to which an embodiment of this application is applicable. The authentication process is an extensible authentication protocol authentication and key agreement (extensible authentication protocol authentication and key agreement, EAP-AKA) authentication procedure.

S310: A UDM network element generates an authentic vector (authentic vector, AV).

The authentic vector may be an EAP-AKA AV.

S320: The UDM network element sends the authentic vector EAP-AKA AV to an AUSF network element.

Optionally, the UDM network element may further send a subscription permanent identifier (subscription permanent identifier, SUPI) to the AUSF network element.

S330: The AUSF network element generates an AKA challenge.

In an EAP-AKA authentication procedure, the AUSF network element may generate the AKA challenge based on the authentic vector.

S340: The AUSF network element sends authentication request information to an AMF network element.

The authentication request information includes an AKA-challenge parameter, a next generation key set identifier (next generation key set identifier, ngKSI) parameter, and an anti-bidding down between architectures (anti-bidding down between architectures, ABBA) parameter. The ABBA parameter is for providing protection for applying a late-version security feature to an early-version system, and indicates that the security feature is enabled in a current network.

The ngKSI parameter identifies a partial local security context created when identity verification succeeds.

S350: The AMF network element sends the authentication request information to terminal device.

S360: The terminal device performs the authentication process.

S370: The terminal device sends authentication response information to the AMF network element.

S380: The AMF network element sends the authentication response information to the AUSF network element.

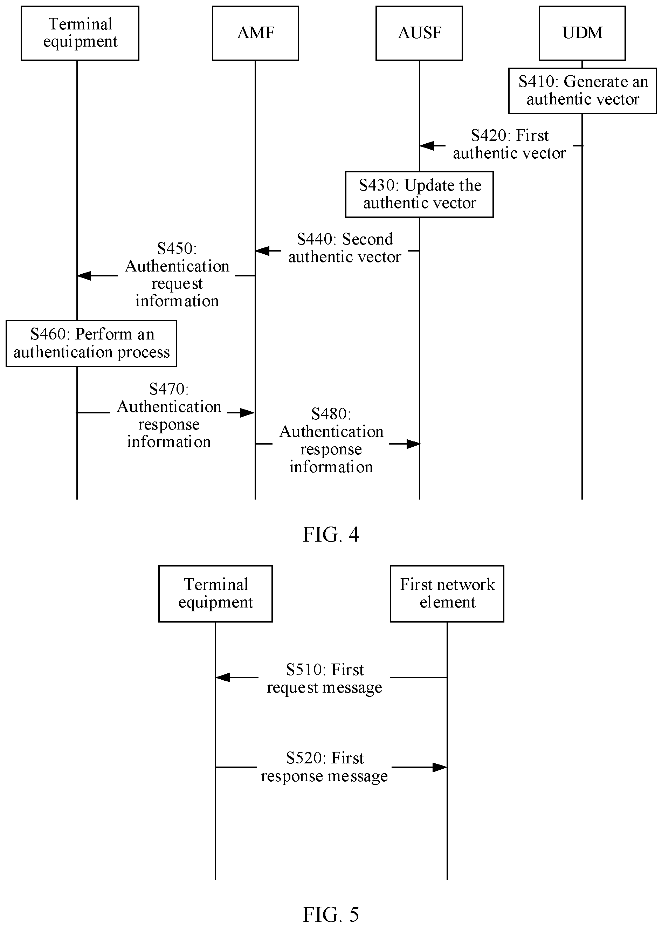

FIG. 4 is a diagram of interaction in another authentication process to which an embodiment of this application is applicable. The authentication process may be a 5th generation authentication and key agreement (5th generation authentication and key agreement, 5G AKA) authentication procedure.

S410: A UDM network element generates a first authentic vector.

The first authentic vector is a 5G homomorphic encryption authentic vector (5G homomorphic encryption authentic vector, 5G HE AV), the first authentic vector includes a random number sequence RAND, and the RAND is a parameter used by terminal device to perform authentication. The first authentic vector further includes an authentication token (authentication token, AUTN), and the AUTN is used by the terminal device to verify an identity of a core network.

S420: The UDM network element sends the first authentic vector to an AUSF network element.

Optionally, an SUPI may alternatively be sent.

S430: The AUSF network element updates the first authentic vector.

The AUSF network element updates the authentic vector 5G HE AV, to generate a 5G AV, namely, a second authentic vector.

S440: The AUSF network element sends the second authentic vector to an AMF network element.

Optionally, the SUPI may alternatively be sent.

S450: The AMF network element sends authentication request information to the terminal device.

S460: The terminal device performs the authentication process.

The terminal device includes a universal subscriber identity module USIM and mobile equipment ME. The USIM checks whether the AUTN may be for verifying freshness of the 5G AV, in other words, whether the 5G AV is within a validity period. If the 5G AV is within the validity period, the USIM computes a response RES (RESponse), and sends the RES, a cipher key (cipher key, CK), and an integrity key (integrity key, IK) to the ME, and the ME computes a RES* from the RES.

S470: The terminal device sends authentication response information to the AMF network element.

The authentication response information includes the RES*.

S480: The AMF network element sends the authentication response information to the AUSF network element.

The authentication response information includes the RES*.

In the EAP-AKA and 5G AKA authentication processs provided in FIG. 3 and FIG. 4, related signaling of remote attestation may be added, and trusted attestation may be performed on the terminal device when access authentication is performed, to improve security of communication between a core network element and the terminal device.

FIG. 5 is a diagram of interaction in a communication method integrated with trusted measurement according to an embodiment of this application. A first network element sends a first request message to terminal device to trigger the terminal device to generate a first response message used by the first network element to verify whether the terminal device is trusted.

S510: The first network element sends the first request message. Accordingly, the terminal device receives the first request message.

The first network element sends the first request message. Accordingly, the terminal device receives the first request message. The first request message is for requesting to verify whether the terminal device is trusted.

In this embodiment provided in this application, the first request message triggers the terminal device to perform trusted measurement and generate the first response message used by the first network element to verify a trusted state of the terminal device. Further, security of communication between the first network element and the terminal device is improved, and security of the network element and the terminal device is improved.

In a possible implementation, the first network element generates the first request message.

In another possible implementation, the first network element generates the first request message in response to a first reference message.

In this embodiment provided in this application, a manner in which the first network element generates the first request information may be that the first network element actively generates the first request message based on an actual service requirement or that generation of the first request message is triggered after the first reference message is received, to initiate a trusted-challenge request to the terminal device.

In a possible implementation, the first request message includes a flag bit, and the flag bit is for triggering the terminal device to generate the first response message.

In this embodiment provided in this application, the first network element may not need to send a challenge value (challenge data) to the terminal device for the terminal device to generate the first response message, but the flag bit triggers the terminal device to generate the first response message. The challenge value may be agreed on by the first network element and the terminal device in advance, and stored in the terminal device. When the terminal device receives the first request message including the flag bit, the terminal device is triggered to generate the first response message based on the challenge value.

In a possible implementation, the first request message includes the challenge value, the challenge value is used by the terminal device to generate the first response information, and the challenge may be further for anti-replay of the first request message.

Optionally, the challenge value includes a first challenge value and/or a second challenge value.

Optionally, the first challenge value is generated by an access management function network element; and/or the second challenge value is generated by an authentication server function network element.

In this embodiment provided in this application, the challenge value may include the two challenge values that are respectively generated by the access management function network element and the authentication server function network element. The access management function network element and the authentication server function network element jointly initiate a challenge request to the terminal device. Accordingly, when generating attestation information, the terminal device needs to concatenate the first challenge value and the second challenge value for the access management function network element and the authentication server function network element to separately perform trusted attestation, to provide double security assurance.

Optionally, the first challenge value and/or the second challenge value are/is any one of an authentication random number, a trusted random number, a timestamp, and a value of an agreed field.

The authentication random number is a random number sequence RAND in an authentic vector generated by a UDM network element in a 5G AKA authentication process, and the first network element may reuse the RAND as the challenge value. The trusted random number is a random number provided by a trusted third party trusted by both the terminal device and the first network element, and the first network element reuses the trusted random number as the challenge value. The timestamp is a trusted clock trusted by both the first network element and the terminal device, for example, clock information generated by using a clock endorsed by an endorser, and the first network element reuses the clock information, namely, the timestamp, as the challenge value, where the endorsement is to attest that a platform is trusted, for example, an endorsement key (endorsement key, EK) is written to identify a unique identity of the platform, to attest that the platform is trusted. The value of the agreed field is a value of any field that is in a data packet and that is agreed on by the first network element and the terminal device in advance, for example, bit data of an $X^{th}$ bit to a $Y^{th}$ bit, and the first network element reuses the value of the agreed field as the challenge value.

In this embodiment provided in this application, the first network element may reuse the authentication random number, the trusted random number, the timestamp, or the value of the agreed field as the challenge value, and does not need to specially generate the challenge value to perform trusted attestation, so that resource overheads can be reduced.

Optionally, the first challenge value is a first random number; and/or the second challenge value is a second random number. The first random number and/or the second random number are respectively/is random numbers/a random number specially generated by the access management function network element and/or the authentication server function network element to perform trusted attestation on the terminal device.

The first network element may include the access management function network element and/or the authentication server function network element.

In a possible implementation, before the first network element sends the first request message, the first network element receives the first reference message, where the first reference message includes a trusted-attestation reference value of the terminal device, the trusted-attestation reference value is trusted-state information of the terminal device, and the first reference message is for verifying the trusted state of the terminal device.

Optionally, the first reference message may further include an attestation public key, and the attestation public key is used by the first network element to decrypt the attestation information.

S520: The first network element receives the first response message. Accordingly, the terminal device sends the first response message.

The first network element receives the first response message. Accordingly, the terminal device sends the first response message. The first response message is for verifying whether the terminal device is trusted, and the first response message may include the attestation information or an attestation result.

In this embodiment provided in this application, the terminal device generates and sends the first response message used by the first network element to verify the trusted state of the terminal device, so that the security of the communication between the first network element and the terminal device can be improved, and the security of the network element and the terminal device can be improved.

In a possible implementation, the first response message includes the attestation information, the attestation information includes a citation and a measurement log, the measurement log is measurement process information of a trusted computing platform supported by the terminal device, the citation includes a digest of the measurement log, and the digest of the measurement log is obtained by performing hash computing on the measurement log.

Optionally, the attestation information may further include a measurement value, and the measurement value is the trusted-state information of the terminal device.

Optionally, the attestation information may further include a trusted signature, and the trusted signature is a signature of the terminal device on the measurement value.

In a possible implementation, the trusted signature includes a first trusted signature or a second trusted signature, the first trusted signature is a signature that is of a trusted computing platform supported by first terminal device and that is on the measurement value and the challenge value, and the second trusted signature is a signature of second terminal device on the first trusted signature, where the terminal device includes the first terminal device and/or the second terminal device.

Optionally, the attestation information may further include a running status, a health degree, security-related configuration or construction information, hardware, firmware, software, a file system, an attestation environment identity, a trusted execution environment, and data integrity that are of the terminal device.

In a possible implementation, the first response message includes the attestation result, the attestation result includes one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

Optionally, the attestation result may further include one or more of the following information:

Configuration (configuration): The verifier verifies a configuration of an attester (attester) (also referred to as a challengee).

Executable file (executables): The verifier verifies a real-time file, a script, and/or other content loaded to a memory that are/is of the attester.

File system (file-system): The verifier verifies a file system of the attester.

Hardware (hardware): The verifier verifies hardware and firmware of the attester, and may sign and run a program.

Attestation environment identity (instance-identity): The verifier verifies an attestation environment identity of the attester, for example, an attestation identity key (attestation identity key, AIK) of a TPM.

Running visibility (runtime-opaque): The verifier verifies visibility of the attester from the outside of the memory of the attester.

Source data (sourced-data): The verifier verifies integrity of data used by the attester.

Storage visibility (storage-opaque): The verifier verifies that the attester can encrypt a persistent memory.

In this embodiment provided in this application, before the first network element requests to verify whether the terminal device is trusted, another verifier has verified whether the terminal device is trusted and sent the attestation result to the terminal device. The terminal device may directly send the attestation result to the first network element, and does not need to repeatedly generate the attestation information, so that an air interface resource can be saved.

In a possible implementation, the verifier sends the attestation result to a trusted third party, and the trusted third party stores the attestation result, where the trusted third party is the third party trusted by both the first network element and the terminal device. When the first network element requests to verify whether the terminal device is trusted, the trusted third party sends the attestation result to the first network element.

In a possible implementation, the first response message includes information indicating rejection of the request information.

In a possible implementation, after the first network element receives the first response message, the first network element receives the first reference message, where the first reference message includes the trusted-attestation reference value of the terminal device, the trusted-attestation reference value is the trusted-state information of the terminal device, and the first reference message is for verifying the trusted state of the terminal device.

Optionally, the first reference message may further include the attestation public key, and the attestation public key may be used by the first network element to decrypt the trusted signature of the terminal device, to verify the trusted state of the terminal device.

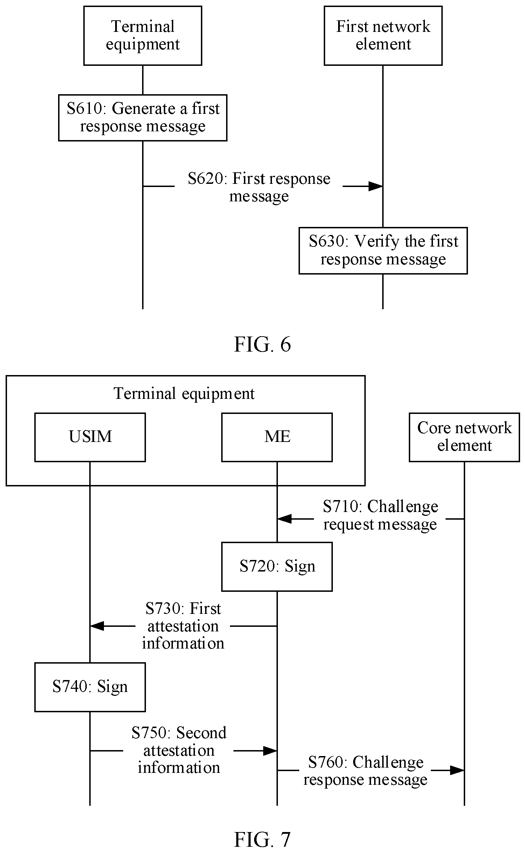

FIG. 6 is a diagram of interaction in another communication method integrated with trusted measurement according to an embodiment of this application. As shown in FIG. 6, a first network element does not need to send a first request message to terminal device, and the terminal device actively generates and sends a first response message used by the first network element to verify whether the terminal device is trusted.

S610: The terminal device generates the first response message.

In a possible implementation, the terminal device may actively generate, based on a timing mechanism, a counting mechanism, an event triggering mechanism, or the like, the first response message used by the first network element to verify a trusted state of the terminal device.

Optionally, the terminal device is triggered based on the timing mechanism to actively generate the first response message. That is, after a timer performs timing to agreed time, the terminal device actively generates the first response message.

Optionally, the terminal device is triggered based on the counting mechanism to actively generate the first response message. That is, after a counter counts to an agreed value, the terminal device actively generates the first response message.

Optionally, the terminal device actively generates the first response message based on the event triggering mechanism. That is, when a preset event occurs, the terminal device is triggered to actively generate the first response information. For example, it may be preset that the terminal device is triggered, when another verifier sends an attestation result of the terminal device to the terminal device, to actively generate the first response message for the first network element.

In this embodiment provided in this application, the terminal device actively generates the first response message, and the first network element does not need to send the first request message to trigger the terminal device to generate and send the first response message, so that signaling overheads can be reduced, and an air interface resource can be saved.

S620: The terminal device sends the first response message to the first network element.

The terminal device is triggered based on the timing mechanism, the counting mechanism, the event triggering mechanism, or the like to send the first response message to the first network element, where the first response message may include attestation information or the attestation result.

In a possible implementation, the first response message includes the attestation information, and the attestation information is generated by the terminal device based on a challenge value.

Optionally, the challenge value may be an authentication random number, and the authentication random number is a random number sequence RAND in an authentic vector generated by a UDM network element in a 5G AKA authentication process. After the 5G AKA authentication process is completed, the terminal device stores the authentication random number, and is triggered based on the timing mechanism or the counting mechanism to actively generate the first response message based on the authentication random number.

Optionally, the challenge value may be a trusted random number, and the trusted random number is a random number provided by a trusted third party trusted by both the terminal device and the first network element.

Optionally, the challenge value may be a timestamp, and the timestamp is a trusted clock trusted by both the terminal device and the first network element, for example, clock information generated by using a clock endorsed by an endorser.

In this embodiment provided in this application, the challenge value may be agreed on by the terminal device and the first network element in advance, and stored in the terminal device, and the terminal device is triggered based on the timing mechanism, the counting mechanism, or the like to actively generate the first response message based on the challenge value. The first network element does not need to send the first request message to trigger the terminal device to generate the first response message, so that the signaling overheads can be reduced, and the air interface resource can be saved.

In a possible implementation, the attestation information includes a citation and a measurement log, the measurement log is measurement process information of a trusted computing platform supported by the terminal device, the citation includes a digest of the measurement log, and the digest of the measurement log is obtained by performing hash computing on the measurement log.

Optionally, the attestation information may further include a measurement value, and the measurement value is trusted-state information of the terminal device.

Optionally, the attestation information may further include a trusted signature, and the trusted signature is a signature of the terminal device on the measurement value.

In a possible implementation, the trusted signature includes a first trusted signature or a second trusted signature, the first trusted signature is a signature that is of a trusted computing platform supported by first terminal device and that is on the measurement value and the challenge value, and the second trusted signature is a signature of second terminal device on the first trusted signature, where the terminal device includes the first terminal device and/or the second terminal device.

Optionally, the attestation information may further include a running status, a health degree, security-related configuration or construction information, hardware, firmware, software, a file system, an attestation environment identity, a trusted execution environment, and data integrity that are of the terminal device.

In a possible implementation, the first response message includes the attestation result, and the attestation result includes one or more of identity information, trusted content, and freshness.

In a possible implementation, the first response message includes information indicating rejection of the request information.

S630: The first network element verifies the first response message of the terminal device.

In a possible implementation, the first response message includes the attestation information, and the attestation information is generated by the terminal device based on the challenge value.

The first network element decrypts the trusted signature by using an attestation public key and the corresponding challenge value, to verify whether an attestation is generated by the terminal device; and compares the measurement value obtained through the decryption with a trusted-attestation reference value, to verify the trusted state of the terminal device, and verify whether the measurement log is valid.

In another possible implementation, the first response message includes the attestation result, and the attestation result includes the one or more of the identity information, the trusted content, and the freshness.

Optionally, the attestation result may further include one or more of the following information: a configuration, an executable file, a file system, hardware, an attestation environment identity, source data, and storage visibility.

The first network element may determine, by using the identity information, an identity of the verifier that obtains the attestation result, may determine, by using the trusted content, specific trusted content verified by the verifier in a process of performing trusted attestation and whether the specific trusted content is applicable to a current trusted-attestation process, and may determine, by using the freshness, time at which the another verifier obtains the attestation result, thereby determining whether the attestation result is within a validity period, and determining whether trusted attestation needs to be performed again.

In this embodiment provided in this application, before the first network element requests to verify whether the terminal device is trusted, the another verifier has verified whether the terminal device is trusted and sent the attestation result to the terminal device. The terminal device may directly send the attestation result to the first network element, and does not need to repeatedly generate the attestation information, so that the air interface resource can be saved.

In a possible implementation, the another verifier sends the attestation result to a trusted third party, and the trusted third party stores the attestation result, where the trusted third party is the third party trusted by both the first network element and the terminal device. When the first network element requests to verify whether the terminal device is trusted, the trusted third party sends the attestation result to the first network element.

In this embodiment provided in this application, the first network element directly checks the attestation result, and does not need to verify the attestation information one by one, so that resource overheads can be reduced.

FIG. 7 shows a communication method integrated with trusted measurement according to an embodiment of this application. As shown in FIG. 7, terminal device includes mobile equipment ME and a universal subscriber identity module USIM, and the ME and the USIM separately sign attestation information, to provide double security assurance.

S710: A core network element sends a challenge request message to the ME.

The core network element sends the challenge request message to the ME, where the challenge request information is for requesting to verify whether the terminal device is trusted.

In a possible implementation, the challenge request message includes a challenge value, the challenge value is used by the terminal device to generate a challenge response message, the challenge response message is used by the core network element to verify whether the terminal device is trusted, and the challenge value may be further for anti-replay of the challenge request message.

In a possible implementation, sending of the challenge request message may be combined with a 5G AKA authentication process. In this case, an authentication random number RAND may be reused as the challenge value, where the RAND is a random number sequence in an authentic vector generated by a UDM network element.

Optionally, the challenge value may be a trusted random number, namely, a random number provided by a trusted third party trusted by both the core network element and the terminal device.

Optionally, the challenge value may be a timestamp, and the timestamp is a trusted clock trusted by both the core network element and the terminal device, for example, clock information generated by using a clock endorsed by an endorser.

Optionally, the challenge value may be a value of an agreed field, namely, a value of a specific field that is in a data packet and that is agreed on by the core network element and the terminal device in advance.

Optionally, the challenge value may be a random number specially generated by the core network element to perform trusted attestation on the terminal device.

In another possible implementation, sending of the challenge request message may alternatively be combined with an EAP-AKA authentication procedure, and the challenge value may be a random number specially generated by the core network element to perform trusted attestation on the terminal device.

Optionally, the challenge value may alternatively be a trusted random number, a timestamp, or a value of an agreed field.

In a possible implementation, the challenge request message includes a flag bit, and the flag bit is for triggering the mobile equipment to generate the attestation information or an attestation result.

In this embodiment provided in this application, the challenge request message may not include a challenge value, but the flag bit triggers the mobile equipment to generate the attestation information or the attestation result. A reserved field in a data packet sent by the core network element to the mobile equipment may be reused as the flag bit. Values of the reserved field are all 0 in an initial state. One or more bits in the reserved field are set to 1, to identify that the data packet includes the challenge request message and trigger the mobile equipment to generate the attestation information or the attestation result.

The ME is first terminal device.

S720: The ME performs signature.

A trusted computing platform of the ME collects an attestation evidence of the mobile equipment, and generates first attestation information, where the first attestation information includes a citation and a measurement log, the measurement log includes process information of performing trusted measurement by the terminal device, the citation includes a digest of the measurement log, and the digest of the measurement log is obtained by performing a hash operation on the measurement log by the terminal device.

Optionally, the first attestation information may include a measurement value, and the measurement value indicates a trusted state of the terminal device.

Optionally, the first attestation information may include a trusted signature, and the trusted signature is a signature that is of the trusted computing platform supported by the ME and that is on the measurement value, namely, an attestation signature of the terminal device (UE's attestation signature, US), namely, a first trusted signature.

Optionally, the first attestation information may include AE‖US, where AE‖US is an association value between the first trusted signature US and hash, namely, the AE, of original attestation information such as the measurement value. "‖" indicates that there is a relationship between the two parties, and the relationship means that the US is generated based on the AE. The AE may be defined as a digest of the attestation evidence of the device, as shown in the following formula:

$$AE = DigestAlgID \| Digest\_DigestAlgID(attestation\ evidence).$$

The AlgID is an identifier of a used hash algorithm. DigestAlgID is the used hash algorithm, such as a message digest algorithm (message digest 5, MD5), or an SHA-1 or an SHA-2 in a secure hash algorithm (secure hash algorithm, SHA). The algorithm MD5 may be for generating a 128-bit message digest by inputting a message of any length. The algorithm SHA-1 may be for generating a 160-bit message digest by inputting a message of a length less than the $64^{th}$ power of 2 bits. In comparison with the SHA-1, the algorithm SHA-2 is for encrypting more data bits and has much higher security performance than the SHA-1. Digest_DigestAlgID(attestation evidence) means performing the hash operation on the original attestation information such as a measurement value in a TPM by using the hash algorithm. In the TPM, the attestation information may include the identifier of the used hash algorithm and a value obtained through the hash operation performed on the measurement value by using the algorithm.

Optionally, the first attestation information may further include a running status, a health degree, security-related configuration or construction information, hardware, firmware, software, a file system, an attestation environment identity, a trusted execution environment, data integrity, and the like that are of the terminal device.

S730: The ME sends the first attestation information to the USIM.

The ME sends the first attestation information to the USIM, where the first attestation information may include the association value AE‖US.

The USIM is second terminal device.

S740: The USIM signs the first attestation information.

In a possible implementation, the USIM receives the first trusted signature, and signs AE‖US in the first attestation information by using a private key of the USIM, to obtain a second trusted signature, where the second trusted signature may be denoted as Sig(USIM). In this case, the attestation information may include AE‖US‖Sig(USIM). That is, second attestation information is obtained, and the second attestation information includes AE‖US‖Sig(USIM).

Optionally, Sig(USIM) may alternatively be a signature of the USIM on the US. That is, the second attestation information may alternatively include US‖Sig(USIM).

S750: The USIM sends the second attestation information to the ME.

The second attestation information includes an association value, namely, AE‖US‖Sig(USIM), between a signature of the USIM on the attestation information and AE‖US.

Optionally, the second attestation information may alternatively include US‖Sig(USIM).

S760: The ME sends the challenge response message to the core network element.

The ME sends the challenge response message to the core network element, where the challenge response message includes the second attestation information, and the second attestation information includes the second trusted signature and AE‖US‖Sig(USIM).

Optionally, the second attestation information may alternatively include US‖Sig(USIM), and the core network element decrypts the second trusted signature based on the corresponding challenge value and an attestation public key, to verify the trusted state of the terminal device.

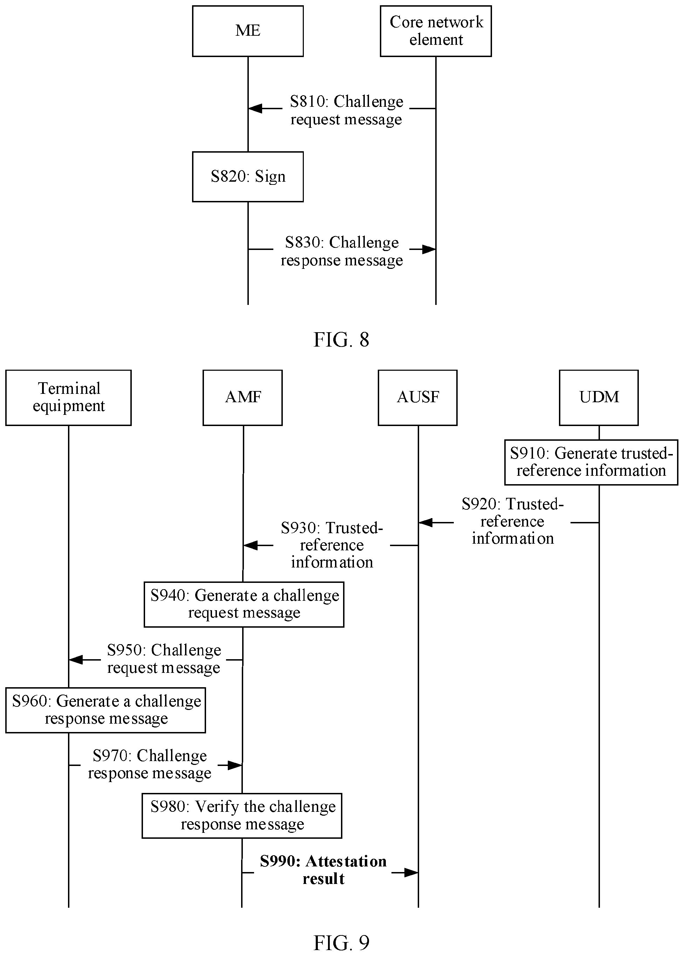

FIG. 8 shows a manner of another communication method integrated with trusted measurement according to an embodiment of this application. As shown in FIG. 8, terminal device generates attestation information, and only mobile equipment ME performs attestation signature, to save time and avoid unnecessary resource overheads.

S810: A core network element sends a challenge request message to the ME.

In a possible implementation, the challenge request message includes a challenge value, and the challenge value is used by the terminal device to generate the attestation information or an attestation result.

Optionally, the challenge value may be further for anti-replay of the challenge request message.

In a possible implementation, sending of the challenge request message may be combined with a 5G AKA authentication process. In this case, an authentication random number RAND may be reused as the challenge value, where the RAND is a random number sequence in an authentic vector generated by a UDM network element.

Optionally, the challenge value may be a timestamp, and the timestamp is a trusted clock trusted by both the core network element and the terminal device, for example, clock information generated by using a clock endorsed by an endorser.

Optionally, the challenge value may be a value of an agreed field, namely, a value of a specific field that is in a data packet and that is agreed on by the core network element and the terminal device in advance.

Optionally, the challenge value may be a trusted random number, namely, a random number provided by a trusted third party trusted by both the core network element and the terminal device.

Optionally, the challenge value may be a random number specially generated by the core network element to perform trusted attestation on the terminal device.

In another possible implementation, sending of the challenge request message may alternatively be combined with an EAP-AKA authentication procedure, and the challenge value may be a random number specially generated by the core network element to perform trusted attestation on the terminal device.

Optionally, the challenge value may alternatively be a trusted random number, a timestamp, or a value of an agreed field.

In a possible implementation, the challenge request message includes a flag bit, and the flag bit is for triggering the mobile equipment to generate the attestation information or an attestation result.

In this embodiment provided in this application, the challenge request message may not include a challenge value, but the flag bit triggers the mobile equipment to generate the attestation information. A reserved field in a data packet sent by the core network element to the mobile equipment may be reused as the flag bit. Values of the reserved field are all 0 in an initial state. One or more bits in the reserved field are set to 1, to identify that the data packet includes the challenge request message and trigger the mobile equipment to generate the attestation information or the attestation result.

S820: The ME performs attestation signature.

A trusted computing platform supported by the ME collects an attestation evidence of the ME, and generates the attestation information (the attestation evidence), where the attestation information includes a citation and a measurement log, the measurement log includes process information of performing trusted measurement by the ME, the citation includes a digest of the measurement log, and the digest of the measurement log is obtained by performing a hash operation on the measurement log by the ME.

Optionally, the attestation information may further include a measurement value, and the measurement value indicates a trusted state of the ME.

Optionally, the attestation information may further include an AE, namely, hash of the measurement value.

Optionally, the attestation information may further include a trusted signature, where the trusted signature is a signature that is of the trusted computing platform supported by the ME on the measurement value and the challenge value, and the signature determined by the trusted computing platform supported by the ME may also be referred to as a first trusted signature, namely, a US.

Optionally, the attestation information may further include AE‖US.

Optionally, the attestation information may further include a running status, a health degree, security-related configuration or construction information, hardware, firmware, software, a file system, an attestation environment identity, a trusted execution environment, data integrity, and the like that are of the terminal device.

S830: The ME sends a challenge response message to the core network element.

In a possible implementation, the challenge response message includes the attestation information.

In another possible implementation, the challenge response message includes the attestation result, and the attestation result includes one or more of identity information, trusted content, and freshness. In this implementation, the terminal device and the core network element do not need to perform step S820.

The methods described in FIG. 7 and FIG. 8 focus on an action of making a challenge response by the terminal device, and FIG. 9 to FIG. 13 focus on an action of generating a challenge request by a core network element. As shown in FIG. 9, an AMF network element generates a challenge request, and verifies a challenge response message of terminal device.

S910: A UDM network element generates a trusted-reference message.

The UDM network element generates the trusted-reference message, where the trusted-reference message is a first reference message, the trusted-reference message includes a trusted-attestation reference value of the terminal device, and the trusted-attestation reference value may be used by the AMF network element to verify a trusted state of the terminal device.

Optionally, the trusted-reference message may further include an attestation public key (public key). The attestation public key may be used by the AMF network element to decrypt a trusted signature of the terminal device, to obtain a measurement value. The measurement value may be used by the AMF network element to verify the trusted state of the terminal device.

Optionally, the trusted-attestation reference value may be defined as:

$$RV = DigestAlgID\|Digest\_DigestAlgID(attestation\ reference\ values).$$

Digest_DigestAlgID(attestation reference values) means performing a hash operation on original attestation reference information (attestation reference values, RV) by using a hash algorithm. A verifier may compare the RVs with values of AEs, to verify whether the terminal device is trusted.

Optionally, the attestation public key may be defined as:

$$PK = SigningAlgID\|SigningPublicKey.$$

SigningAlgID indicates an algorithm for signature, SigningPublicKey indicates a public key for the signature, and "||" indicates that SigningAlgID and SigningPublicKey have a parallel relationship.

Optionally, step S910 may be performed in combination with step S310 or step S410.

S920: The UDM network element sends the trusted-reference message to an AUSF network element.

The UDM network element sends the trusted-reference message to the AUSF network element, where the trusted-reference message includes the trusted-attestation reference value of the terminal device, and the UDM network element is a second network element.

Optionally, the trusted-reference message may further include the attestation public key.

Optionally, step S920 may be performed in combination with step S320 or step S420.

S930: The AUSF network element sends the trusted-reference message to the AMF network element.

The AUSF network element sends the trusted-reference message to the AMF network element, where the trusted-reference message includes the trusted-attestation reference value.

Optionally, the trusted-reference message may further include the attestation public key.

Optionally, step S930 may be performed in combination with step S440 or step S340.

S940: The AMF network element generates a challenge request message.

The AMF network element generates the challenge request message in response to the trusted-reference message, where the challenge request message is for requesting the challenge response message of the terminal device. The AMF network element is a first network element.

In a possible implementation, the challenge request message includes a challenge value, the challenge value is used by the terminal device to generate attestation information, and the challenge value may be further for anti-replay of the challenge request message.

Optionally, sending of the challenge request message may be combined with a 5G AKA authentication process, the challenge value may be an authentication random number, the authentication random number is a random number sequence RAND in an authentic vector generated by the UDM network element, and the first network element may reuse the RAND as the challenge value.

Optionally, the challenge value may be a trusted random number, and the trusted random number is a random number provided by a trusted third party trusted by both the terminal device and the first network element.

Optionally, the challenge value may be a timestamp, and the timestamp is a trusted clock trusted by both the first network element and the terminal device, for example, clock information generated by using a clock endorsed by an endorser.

Optionally, the challenge value may be a value of an agreed field, and the value of the agreed field is a value of any field that is agreed on by the first network element and the terminal device in advance, for example, bit data of an $X^{th}$ bit to a $Y^{th}$ bit.

In another possible implementation, the challenge request message includes a flag bit, and the flag bit is for triggering the terminal device to generate the challenge response message.

S950: The AMF network element sends the challenge request message to the terminal device.

The AMF network element sends the challenge request message to the terminal device, where the challenge request message is for requesting to verify whether the terminal device is trusted.

Optionally, step S950 may be performed in combination with step S350 or step S450.

S960: The terminal device generates the challenge response message.

In a possible implementation, the challenge response message includes the attestation information, and the attestation information is generated by the terminal device based on the challenge request message or the challenge value.

The terminal device collects an attestation evidence, and generates the attestation information, where the attestation information includes a citation and a measurement log, the measurement log includes process information of performing trusted measurement by the terminal device, the citation includes a digest of the measurement log, and the digest of the measurement log is obtained by performing a hash operation on the measurement log by the terminal device.

Optionally, the attestation information may further include the measurement value, and the measurement value indicates the trusted state of the terminal device.

Optionally, the attestation information may further include the trusted signature, where the trusted signature is a signature that is of a trusted computing platform supported by mobile equipment that is on the measurement value and the challenge value, and the trusted signature may include a first trusted signature or a second trusted signature.

A process in which the terminal device performs attestation signature may be the process described in FIG. 7 or FIG. 8.

Optionally, the attestation information may further include a running status, a health degree, security-related configuration or construction information, hardware, firmware, software, a file system, an attestation environment identity, a trusted execution environment, data integrity, and the like that are of the terminal device.

In another possible implementation, the challenge response message includes an attestation result, the terminal device collects the attestation result, the attestation result may be a result of verification performed by another verifier on the terminal device, and the attestation result includes one or more of identity information, trusted content, and freshness.

Optionally, step S960 may be performed in combination with step S360 or step S460.

S970: The terminal device sends the challenge response message to the AMF network element.

In a possible implementation, the challenge response message includes the attestation information.

In another possible implementation, the challenge response message includes the attestation result.

The challenge response message is used by the AMF network element to verify whether the terminal device is trusted.

Optionally, step S970 may be performed in combination with step S370 or step S470.

S980: The AMF network element verifies the challenge response message of the terminal device.

In a possible implementation, the challenge response message includes the attestation information. The AMF network element performs a verification process. The AMF network element decrypts a received attestation signature by using the public key, to obtain the measurement value, and compares the measurement value with the trusted-attestation reference value. If the measurement value and the trusted-attestation reference value are the same, the terminal device is in the trusted state. In addition, whether the measurement log is valid is verified.

In another possible implementation, the challenge response message includes the attestation result, and the AMF network element directly checks the attestation result, to determine the trusted state of the terminal device.

S990: The AMF network element sends the attestation result to the AUSF network element.

The AMF network element sends the attestation result to the AUSF network element, where the attestation result includes the one or more of the identity information, the trusted content, and the freshness.

Optionally, step S990 may be performed in combination with step S380 or step S480.

Optionally, the UDM network element may alternatively be an authentication credential repository and processing function (authentication credential repository and processing function, ARPF) network element or another network element having a similar function. This is not limited in this application.

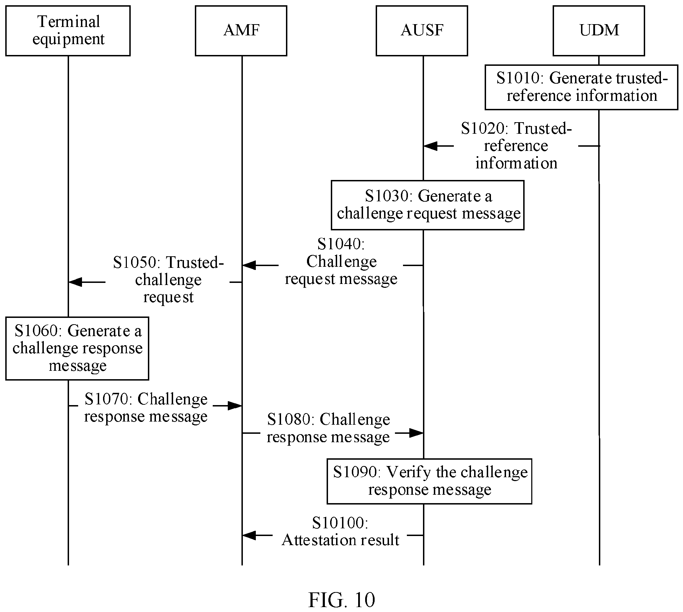

FIG. 10 is a diagram of interaction in another communication method integrated with trusted measurement according to an embodiment of this application. As shown in FIG. 10, an AUSF network element generates a challenge request, and verifies a challenge response message of terminal device.

S1010: AUDM network element generates a trusted-reference message.

The UDM network element generates the trusted-reference message, where the trusted-reference message is a first reference message, the trusted-reference message includes a trusted-attestation reference value of the terminal device, and the trusted-attestation reference value may be used by the AUSF network element to verify a trusted state of the terminal device.

Optionally, the trusted-reference message may further include an attestation public key (public key).

Optionally, step S1010 may be performed in combination with step S310 or step S410.

S1020: The UDM network element sends the trusted-reference message to the AUSF network element.

The UDM network element sends the trusted-reference message to the AUSF network element, where the trusted-reference message includes the trusted-attestation reference value of the terminal device.

Optionally, the trusted-reference message may further include the attestation public key.

Optionally, step S 1020 may be performed in combination with step S320 or step S420.

S1030: The AUSF network element generates a challenge request message.

The AUSF network element generates a trusted-challenge request message in response to the trusted-reference message, where the trusted-challenge request message is for requesting to verify whether the terminal device is trusted.

In a possible implementation, the challenge request message includes a challenge value, the challenge value is used by the terminal device to generate the challenge response message, and the challenge value may be further for anti-replay of the challenge request message.

Optionally, sending of the challenge request message may be combined with a 5G AKA authentication process, the challenge value may be an authentication random number, the authentication random number is a random number sequence RAND in an authentic vector generated by the UDM network element, and the first network element may reuse the RAND as the challenge value.

Optionally, the challenge value may alternatively be a trusted random number, a timestamp, or a value of an agreed field.

In another possible implementation, the challenge request message includes a flag bit, and the flag bit is for triggering the terminal device to generate the challenge response message.

Optionally, step S1030 may be performed in combination with step S330 or step S430.

S1040: The AUSF network element sends the trusted-challenge request message to an AMF network element.

The AUSF network element sends the trusted-challenge request message to the AMF network element, where the trusted-challenge request message is for requesting to verify whether the terminal device is trusted.

Optionally, step S1040 may be performed in combination with step S340 or step S440.

S1050: The AMF network element sends the challenge request message to the terminal device.

Optionally, the AMF network element may send the challenge request message to the terminal device through transparent transmission.

Optionally, step S1050 may be performed in combination with step S350 or step S450.

S1060: The terminal device generates the challenge response message.

In a possible implementation, the terminal device collects an attestation evidence, and generates attestation information, where the attestation information includes a citation and a measurement log, the measurement log includes process information of performing trusted measurement by the terminal device, the citation includes a digest of the measurement log, and the digest of the measurement log is obtained by performing a hash operation on the measurement log by the terminal device.

Optionally, the attestation information may further include a measurement value and/or a trusted signature.

Optionally, the trusted signature may include a first trusted signature or a second trusted signature.

A process in which the terminal device performs attestation signature may be the process described in FIG. 7 or FIG. 8.

In another possible implementation, the terminal device collects an attestation result, the attestation result may be a result of verification performed by another verifier on the terminal device, and the attestation result includes one or more of identity information, trusted content, and freshness.

Optionally, step S1060 may be performed in combination with step S360 or step S460.

S1070: The terminal device sends the challenge response message to the AMF network element.

In a possible implementation, the challenge response message includes the attestation information of the terminal device.

In another possible implementation, the challenge response message includes the attestation result of the terminal device.

The challenge response message is used by the AUSF network element to verify whether the terminal device is trusted.

Optionally, step S1070 may be performed in combination with step S370 or step S470.

S1080: The AMF network element sends the challenge response message to the AUSF network element.

Optionally, the AMF network element may send the challenge response message to the AUSF network element through transparent transmission.

Optionally, step S1080 may be performed in combination with step S380 or step S480.

S1090: The AUSF network element verifies the challenge response message.

In a possible implementation, the challenge response message includes the attestation information. The AMF network element performs a verification process. The AMF network element decrypts a received attestation signature by using the public key, to obtain the measurement value, and compares the measurement value with the trusted-attestation reference value. If the measurement value and the trusted-attestation reference value are the same, the terminal device is in the trusted state. In addition, whether the measurement log is valid is verified.

In another possible implementation, the challenge response message includes the attestation result, and the AMF network element directly checks the attestation result, to determine the trusted state of the terminal device.

S10100: The AUSF network element sends the attestation result to the AMF network element.

The AMF network element sends the attestation result to the AUSF network element, where the attestation result includes the one or more of the identity information, the trusted content, and the freshness.

Optionally, the UDM network element may be an ARPF network element or another network element having a similar function. This is not limited in this application.

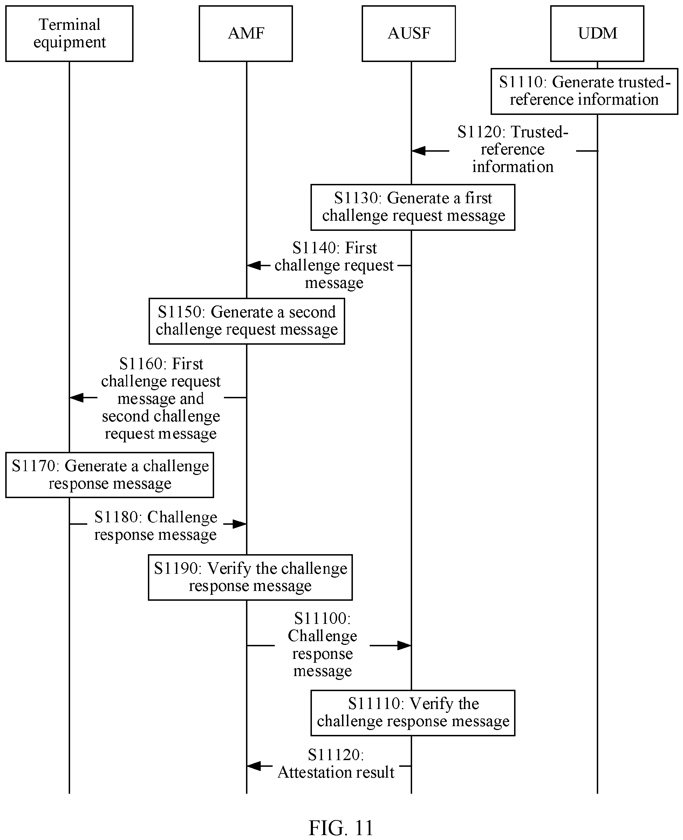

FIG. 11 is a diagram of interaction in another communication method integrated with trusted measurement according to an embodiment of this application. As shown in FIG. 11, an AUSF network element and an AMF network element separately generate a challenge request message, and jointly serve as a verifier to verify a challenge response message of terminal device.

S 1110: A UDM network element generates a trusted-reference message.

The UDM network element generates the trusted-reference message, where the trusted-reference message includes a trusted-attestation reference value of the terminal device, and the trusted-attestation reference value may be used by the AMF network element to verify a trusted state of the terminal device.

Optionally, the trusted-reference message may further include an attestation public key.

Optionally, step S1110 may be performed in combination with step S310 or step S410.

S1120: The UDM network element sends the trusted-reference message to the AUSF network element.

The UDM network element sends the trusted-reference message to the AUSF network element, where the trusted-reference message includes the trusted-attestation reference value of the terminal device.

Optionally, the trusted-reference message may further include the attestation public key.

Optionally, step S1120 may be performed in combination with step S320 or step S420.

S1130: The AUSF network element generates a first trusted-challenge request message.

The AUSF network element generates a first challenge request message in response to the trusted-reference message, where the first challenge request message is for requesting the challenge response message of the terminal device.

In a possible implementation, the first challenge request message includes a first challenge value, the first challenge value is used by the terminal device to generate the challenge response message, and the first challenge value may be further for anti-replay of the first challenge request message.

Optionally, sending of the first challenge request message may be combined with a 5G AKA authentication process, the first challenge value may be an authentication random number, the authentication random number is a random number sequence RAND in an authentic vector generated by the UDM network element, and the first network element may reuse the RAND as the first challenge value.

Optionally, the first challenge value may alternatively be a trusted random number, a timestamp, or a value of an agreed field.

In another possible implementation, the first challenge request message includes a first flag bit, and the first flag bit is for triggering the terminal device to generate the challenge response message.

Optionally, step S1130 may be performed in combination with step S330 or step S430.

S1140: The AUSF network element sends the first challenge request message to the AMF network element.

In a possible implementation, the first challenge request message includes the first challenge value.

In another possible implementation, the first challenge request message includes the first flag bit.

Optionally, the first challenge request message includes the trusted-attestation reference value, and the trusted-attestation reference value is used by the AMF network element to verify the trusted state of the terminal device.

Optionally, the first challenge request message includes the attestation public key.

Optionally, step S1140 may be performed in combination with step S340 or step S440.

S 1150: The AMF network element generates a second challenge request message.

The AMF network element generates the second challenge request message in response to the first challenge request message, where the second challenge request message is for requesting to verify whether the terminal device is trusted.

In a possible implementation, the second challenge request message includes a second challenge value, the second challenge value is used by the terminal device to generate the challenge response message, and the second challenge value may be further for anti-replay of the second challenge request message.

Optionally, sending of the second challenge request message may be combined with the 5G AKA authentication process, the second challenge value may be an authentication random number, the authentication random number is a random number sequence RAND in the authentic vector generated by the UDM network element, and the AMF network element may reuse the RAND as the second challenge value.

Optionally, the second challenge value may alternatively be a trusted random number, a timestamp, or a value of an agreed field.

In another possible implementation, the second challenge request message includes a second flag bit, and the second flag bit is for triggering the terminal device to generate the challenge response message.

S1160: The AMF network element sends the first challenge request message and the second challenge request message to the terminal device.

The AMF network element sends the first challenge request message and the second challenge request message to the terminal device.

Optionally, the first challenge request message includes the first challenge value, and the second challenge request message includes the second challenge value.

Optionally, the first challenge request message includes the first flag bit, and the second challenge request message includes the second challenge value; or the first challenge request message includes the first challenge value, and the second challenge request message includes the second flag bit.

The first challenge request message includes the first flag bit, and the second challenge request message includes the second flag bit.

Optionally, step S1160 may be performed in combination with step S350 or step S450.

S1170: The terminal device generates the challenge response message.

In a possible implementation, the challenge response message includes attestation information, the attestation information is generated by the terminal device based on a challenge request messages or a challenge value, and the challenge request message includes the first challenge request message and the second challenge request message.

Optionally, the first challenge request message includes the first challenge value, the second challenge request message includes the second challenge value, and the terminal device concatenates the first challenge value and the second challenge value, to generate the attestation information. The concatenation is to associate the first challenge value with the second challenge value and use the first challenge value and the second challenge value as one challenge value.

For example, the challenge value is a 128-bit value, the first challenge value may occupy the first 64 bits, and the second challenge value may occupy the last 64 bits; or an exclusive-NOR or exclusive-OR operation is performed on the first challenge value and the second challenge value to obtain the challenge value.

Optionally, the first challenge request message includes the first flag bit, and the second challenge request message includes the second challenge value; or the first challenge request message includes the first challenge value, and the second challenge request message includes the second flag bit. In this case, the terminal device generates the attestation information based on the first challenge value or the second challenge value.

Optionally, the first challenge request message includes the first flag bit, and the second challenge request message includes the second flag bit. The terminal device generates the attestation information based on a challenge value that is agreed on by the first network element and the terminal device in advance and stored in the terminal device.

In another possible implementation, the challenge response message includes an attestation result, the attestation result may be a result of verification performed by another verifier on the terminal device, and the attestation result includes one or more of identity information, trusted content, and freshness.

Optionally, step S1170 may be performed in combination with step S360 or step S460.

S1180: The terminal device sends the challenge response message to the AMF network element.

In a possible implementation, the challenge response message includes the attestation information.

In another possible implementation, the challenge response message includes the attestation result.

The challenge response message is used by the AMF network element and the AUSF network element to verify whether the terminal device is trusted.

Optionally, step S1180 may be performed in combination with step S370 or step S470.

S1190: The AMF network element verifies the challenge response message.

In a possible implementation, the challenge response message includes the attestation information. The AMF network element performs a verification process. The AMF network element decrypts a received attestation signature by using the public key and the first challenge value and/or the second challenge value, to obtain a measurement value, and compares the measurement value with the trusted-attestation reference value. If the measurement value and the trusted-attestation reference value are the same, the terminal device is in the trusted state. In addition, whether a measurement log is valid is verified.

In another possible implementation, the challenge response message includes the attestation result, and the AMF network element directly checks the attestation result, to determine the trusted state of the terminal device.

If the AMF network element verifies that the terminal device is in the trusted state, the AMF network element performs step S 11100. If the AMF network element verifies that the terminal device is in an untrusted state, verification ends.

S 11100: The AMF network element sends the challenge response message to the AUSF network element.

In a possible implementation, the challenge response message includes the attestation information.

Optionally, if the second challenge request message includes the second challenge value, the AMF network element sends the challenge response message and the second challenge request message to the AUSF network element, where the second challenge value is used by the AUSF network element to decrypt the attestation signature.

Optionally, if the second challenge request message includes the second flag bit, the AMF network element sends the challenge response message to the AUSF network element.

Optionally, the AMF network element sends, to the AUSF network element, a result of attestation performed by the AMF network element on the terminal device.

In a possible implementation, if the challenge response message includes the attestation result, the AMF network element sends the challenge response message to the AUSF network element.

Optionally, step S1110 may be performed in combination with step S380 or step S480.

S11110: The AUSF verifies the challenge response message.

In a possible implementation, the challenge response message includes the attestation information.

Optionally, the AUSF network element receives the second challenge request message and the challenge response message, where the second challenge request message includes the second challenge value. In this case, the AUSF network element decrypts the attestation signature by using the attestation public key, the first challenge value, and the second challenge value, to obtain the measurement value, and compares the measurement value with the trusted-attestation reference value. If the measurement value and the trusted-attestation reference value are equal, the terminal device is in the trusted state. In addition, whether the measurement log is valid is verified.

Optionally, the AUSF network element receives the challenge response message. In this case, the AUSF network element decrypts the attestation signature by using the attestation public key and the first challenge value or the challenge value stored in the terminal device in advance, to obtain the measurement value, and compares the measurement value with the trusted-attestation reference value. If the measurement value and the trusted-attestation reference value are equal, the terminal device is in the trusted state. In addition, whether the measurement log is valid is verified.

In a possible implementation, if the challenge response message includes the attestation result, the AUSF network element directly checks the attestation result, to determine the trusted state of the terminal device.

In this embodiment provided in this application, the AMF network element and the AUSF network element jointly verify the challenge response message. The terminal device is determined, only when both verification results of the AMF network element and the AUSF network element indicate that the terminal device is trusted, to be in the trusted state. This provides double assurance for security of communication between a core network element and the terminal device.

S11120: The AUSF network element sends an attestation result to the AMF network element.

Optionally, the AUSF network element sends the attestation result to the AMF network element, where the attestation result includes one or more of the identity information, the trusted content, and the freshness.

Optionally, the UDM network element may be an ARPF network element or another network element having a similar function. This is not limited in this application.

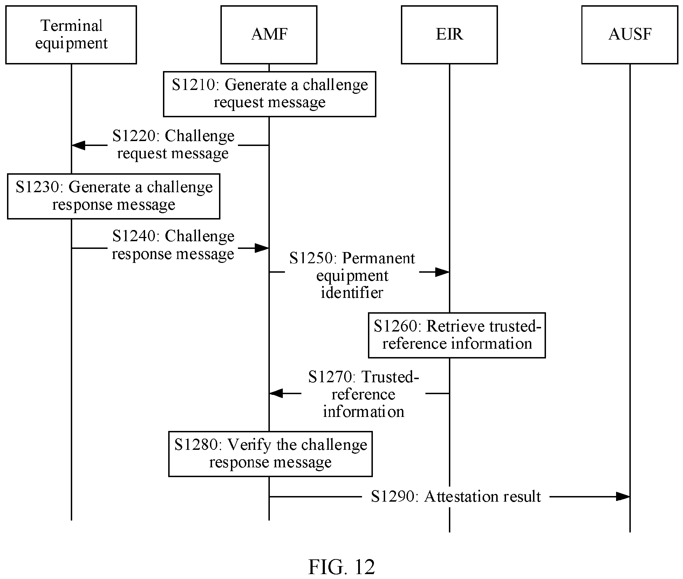

FIG. 12 is a diagram of interaction in another communication method integrated with trusted measurement according to an embodiment of this application. As shown in FIG. 12, an equipment identity register stores a trusted-reference message, and retrieves the corresponding trusted-reference message based on a permanent equipment identifier.

S1210: An AMF network element generates a challenge request message.

In a possible implementation, the challenge request message includes a challenge value, the challenge value is used by terminal device to generate a challenge response message, and the challenge value may be further for anti-replay of the challenge request message.

In a possible implementation, sending of the challenge request message may be combined with a 5G AKA authentication process. In this case, an authentication random number RAND may be reused as the challenge value, where the RAND is a random number sequence in an authentic vector generated by a UDM network element.

Optionally, the challenge value may be a trusted random number, a timestamp, or a value of an agreed field.

Optionally, the challenge value may be a random number specially generated by the AMF network element to perform trusted attestation on the terminal device.

In another possible implementation, sending of the challenge request message may alternatively be combined with an EAP-AKA authentication procedure, and the challenge value may be a random number specially generated by a core network element to perform trusted attestation on the terminal device.

Optionally, the challenge value may alternatively be any one of a timestamp, a value of an agreed field, or a trusted random number.

In a possible implementation, the challenge request message includes a flag bit, and the flag bit is for triggering mobile equipment to generate the challenge response message.

S1220: The AMF network element sends the challenge request message to the terminal device.

The AMF network element sends the challenge request message to the terminal device, where the challenge request message is for triggering the terminal device to generate and send the challenge response message.

S1230: The terminal device generates the challenge response message.

In a possible implementation, the challenge response message includes attestation information, and the attestation information is generated by the terminal device based on the challenge request message and/or the challenge value.

The terminal device collects an attestation evidence, and generates the attestation information, where the attestation information includes a citation and a measurement log, the measurement log includes process information of performing trusted measurement by the terminal device, the citation includes a digest of the measurement log, and the digest of the measurement log is obtained by performing a hash operation on the measurement log by the terminal device.

Optionally, the attestation information may further include a measurement value or a trusted signature.

Optionally, the trusted signature may include a first trusted signature or a second trusted signature.

A process in which the terminal device performs attestation signature may be the process described in FIG. 7 or FIG. 8.

Optionally, the challenge response message may further include the PEI of the terminal device.

In another possible implementation, the challenge response message includes an attestation result.

S1250: The AMF network element sends the PEI to the EIR network element.

The AMF network element sends the PEI of the terminal device included in the challenge response message to the EIR network element, so that the EIR network element retrieves, based on the PEI of the terminal device, the trusted-reference message corresponding to the terminal device.

S1260: The EIR network element retrieves the trusted-reference message.

The EIR network element retrieves, based on the PEI of the terminal device, the trusted-reference message corresponding to the terminal device, where the trusted-reference message includes a trusted-attestation reference value of the terminal device, and the trusted-attestation reference value may be used by the AMF network element to verify a trusted state of the terminal device.

Optionally, the trusted-reference message may further include an attestation public key (public key).

S1270: The EIR network element sends the trusted-reference message to the AMF network element.

The EIR network element sends the trusted-reference message corresponding to the terminal device to the AMF network element, where the trusted-reference message is used by the AMF network element to verify the trusted state of the terminal device.

S1280: The AMF network element verifies the challenge response message.

In a possible implementation, the challenge response message includes the attestation information. The AMF network element performs a verification process. The AMF network element decrypts a received attestation signature by using the public key, to obtain the measurement value, and compares the measurement value with the trusted-attestation reference value. If the measurement value and the trusted-attestation reference value are the same, the terminal device is in the trusted state. In addition, whether the measurement log is valid is verified.

In another possible implementation, the challenge response message includes the attestation result, and the AMF network element directly checks the attestation result, to determine the trusted state of the terminal device.

S1290: The AMF network element sends the attestation result to the AUSF network element.

The AMF network element sends the attestation result to the AUSF network element, where the attestation result includes one or more of identity information, trusted content, and freshness.

In this embodiment provided in this application, the core network element that generates the challenge request message and performs the verification process may alternatively be the AUSF network element, or the AMF network element and the AUSF network element may separately generate the challenge request message and jointly perform the verification process. A procedure of generating the challenge request message and performing the verification process may be the processes described in FIG. 10 and FIG. 11. Details are not described herein again.

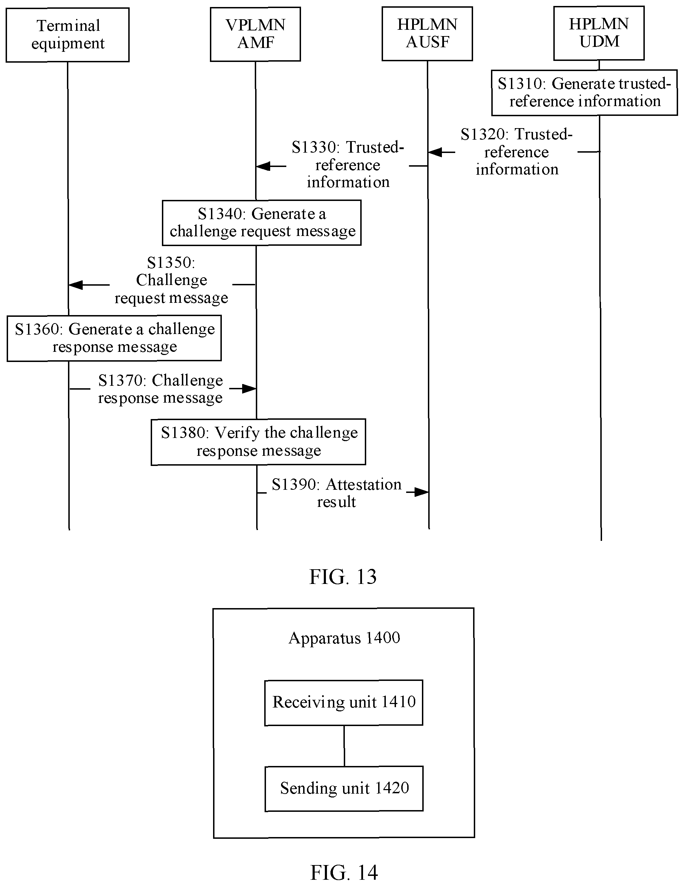

FIG. 13 is a diagram of interaction in another communication method integrated with trusted measurement according to an embodiment of this application. A mobile communication method that is integrated with trusted attestation and that is provided in this application may alternatively be applied to a roaming scenario. A home network (home public land mobile network, HPLMN) generates a trusted-reference message, and sends the trusted-reference message to a visited network (visited public land mobile network, VPLMN), and the visited network performs a verification process.

S1310: An HPLMN UDM network element generates the trusted-reference message.

The UDM network element generates the trusted-reference message, where the trusted-reference message includes a trusted-attestation reference value of terminal device, and the trusted-attestation reference value may be used by an AUSF network element to verify a trusted state of the terminal device, that is, compare whether the trusted-attestation reference value and a measurement value are equal.

Optionally, the trusted-reference message may further include an attestation public key (public key).

Optionally, step S1310 may be performed in combination with step S310 or step S410.

S1320: The HPLMN UDM network element sends the trusted-reference message to the HPLMN AUSF network element.

The UDM network element sends the trusted-reference message to the AUSF network element, where the trusted-reference message includes the trusted-attestation reference value of the terminal device.

Optionally, the trusted-reference message may further include the attestation public key.

Optionally, step S1320 may be performed in combination with step S320 or step S420.

S1330: The HPLMN AUSF network element sends the trusted-reference message to a VPLMN AMF network element.

The trusted-reference message is used by the VPLMN AMF network element to verify the trusted state of the terminal device.

Optionally, step S1330 may be performed in combination with step S340 or step S440.

S1340: The VPLMN AMF network element generates a challenge request message.

The VPLMN AMF network element generates the challenge request message in response to the trusted-reference message, where the challenge request message is for requesting a challenge response message of the terminal device.

In a possible implementation, the challenge request message includes a challenge value, the challenge value is used by the terminal device to generate attestation information, and the challenge value may be further for anti-replay of the challenge request message.

Optionally, sending of the challenge request message may be combined with a 5G AKA authentication process, the challenge value may be an authentication random number, the authentication random number is a random number sequence RAND in an authentic vector generated by the HPLMN UDM network element, and the first network element may reuse the RAND as the challenge value.

Optionally, the challenge value may be a trusted random number, a timestamp, or a value of an agreed field.

In another possible implementation, the challenge request message includes a flag bit, and the flag bit is for triggering the terminal device to generate the challenge response message.

S1350: The VPLMN AMF network element sends the challenge request message to the terminal device.

The VPLMN AMF network element sends the challenge request message to the terminal device, where the challenge request message is for triggering the terminal device to generate and send the challenge response message.

Optionally, step S1350 may be performed in combination with step S350 or step S450.

S1360: The terminal device generates the challenge response message.

In a possible implementation, the challenge response message includes the attestation information, and the attestation information is generated by the terminal device based on the challenge request message or the challenge value.

The terminal device collects an attestation evidence, and generates the attestation information, where the attestation information includes a citation and a measurement log, the measurement log includes process information of performing trusted measurement by the terminal device, the citation includes a digest of the measurement log, and the digest of the measurement log is obtained by performing a hash operation on the measurement log by the terminal device.

Optionally, the attestation information may further include a measurement value or a trusted signature.

A process in which the terminal device performs attestation signature may be the process described in FIG. 7 or FIG. 8.

In another possible implementation, the challenge response message includes an attestation result, the terminal device collects the attestation result, the attestation result may be a result of verification performed by another verifier on the terminal device, and the attestation result includes one or more of identity information, trusted content, and freshness.

Optionally, step S1360 may be performed in combination with step S360 or step S460.

S1370: The terminal device sends the challenge response message to the VPLMN AMF network element.

In a possible implementation, the challenge response message includes the attestation information.

In another possible implementation, the challenge response message includes the attestation result.

Optionally, step S1370 may be performed in combination with step S370 or step S470.

S1380: The VPLMN AMF network element verifies the challenge response message of the terminal device.

In a possible implementation, the challenge response message includes the attestation information. The AMF network element performs the verification process. The AMF network element decrypts a received attestation signature by using the public key, to obtain the measurement value, and compares the measurement value with the trusted-attestation reference value. If the measurement value and the trusted-attestation reference value are the same, the terminal device is in the trusted state. If the measurement value and the trusted-attestation reference value are different, the terminal device is in an untrusted state.

In another possible implementation, the challenge response message includes the attestation result, and the AMF network element directly checks the attestation result, to determine the trusted state of the terminal device.

S1390: The VPLMN AMF network element sends the attestation result to the HPLMN AUSF network element.

The VPLMN AMF network element sends the attestation result to the HPLMN AUSF network element, where the attestation result includes the one or more of the identity information, the trusted content, and the freshness.

In this embodiment provided in this application, the AUSF network element may alternatively be used as the visited network to generate the challenge request message and perform the verification process. An interaction procedure thereof may be the process described in FIG. 10. Details are not described herein again. In addition, the AUSF network element and the AMF network element may be jointly used as the visited network to separately generate the challenge request message and jointly perform the verification process. An interaction procedure thereof may be the process described in FIG. 11. Details are not described herein again.

In embodiments provided in this application, a remote-attestation process between the core network element and the terminal device may be performed in combination with the EAP-AKA or 5G AKA authentication process. Alternatively, the authentication process may be performed after the remote-attestation process is completed, to improve security of the authentication process. Alternatively, the remote-attestation process may be performed after the authentication process is completed. This is not limited in this application.

FIG. 14 is a block diagram of a structure of a communication apparatus according to an embodiment of this application. The communication apparatus may be terminal device, a part (for example, a chip or a circuit) that may be used in the terminal device, or an apparatus that can be used together with the terminal device. As shown in FIG. 14, the communication apparatus 1400 may include a receiving unit 1410 and a sending unit 1420.

The receiving unit 1410 is configured to receive a first request message, where the first request message is for requesting to verify whether the terminal device is trusted.

The sending unit 1420 is configured to send a first response message, where the first response message is for verifying whether the terminal device is trusted.

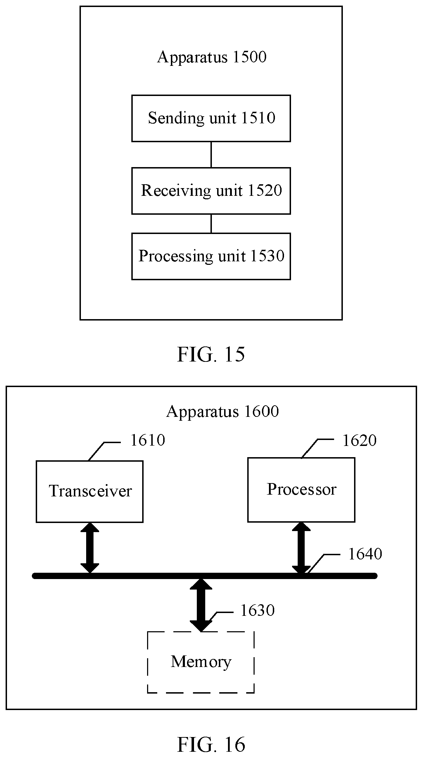

FIG. 15 is a block diagram of a structure of another example of a communication apparatus according to an embodiment of this application. The communication apparatus may be a second network element or a part (for example, a chip or a circuit) that may be used in the second network element. As shown in FIG. 15, the communication apparatus 1500 may include a sending unit 1510, a receiving unit 1520, and a processing unit 1530.

The sending unit 1510 is configured to send a first request message, where the first request message is for requesting to verify whether terminal device is trusted.

The receiving unit 1520 is configured to receive a first response message, where the first response message is for verifying whether the terminal device is trusted.

The receiving unit 1520 is further configured to receive a first reference message, where the first reference message includes a trusted-attestation reference value of the terminal device, and the first reference message is for verifying whether the terminal device is trusted.

The processing unit 1530 is configured to generate the first request message.

The processing unit 1530 is further configured to generate the first request message in response to the first reference message.

The processing unit 1530 is further configured to verify the first response message.

In a possible manner, the sending unit 1510 and the receiving unit 1520 may be implemented by a transceiver, and the processing unit 1530 may be implemented by a processor. For specific functions and beneficial effects of the sending unit 1510, the receiving unit 1520, and the processing unit 1530, refer to the methods shown in FIG. 5 to FIG. 13. Details are not described herein again.

Refer to FIG. 16. An embodiment of this application further provides a communication apparatus 1600, configured to implement functions of the communication apparatus 1400 or the communication apparatus 1500 in the foregoing method. The communication apparatus may be terminal device or a network device, an apparatus in the terminal device or the network device, or an apparatus that can be used together with the terminal device or the network device. The communication apparatus 1600 includes at least one processor 1610, and the communication apparatus 1600 may further include a communication interface 1620.

The communication interface 1610 may be configured to perform functions performed by the receiving unit 1410 and the sending unit 1420 in the communication apparatus 1400 or the sending unit 1510 and the receiving unit 1520 in the communication apparatus 1500. The processor 1610 may perform functions performed by the processing unit 1530 in the communication apparatus 1500.

When the communication apparatus 1600 is configured to perform operations performed by the communication apparatus 1400, the communication interface 1610 is used by the terminal device to receive a first request message and send the first response message; and the processor 1620 is used by the terminal device to generate the first response message.

When the communication apparatus 1600 is configured to perform operations performed by the communication apparatus 1500, the communication interface 1610 is used by a first network element to send a first request message, receive a first response message, and receive a first reference message; and the processor 1620 is used by the first network element to generate the first request message, generate the first request message in response to the first reference message, and verify the first response message.

The communication interface 1610 is further configured to perform other receiving or sending steps or operations performed by the communication apparatus 1400 and the communication apparatus 1500 in the foregoing method embodiments. The processor 1620 may be further configured to perform corresponding steps or operations other than sending and receiving performed by the communication apparatus 1400 and the communication apparatus 1500 in the foregoing method embodiments. Details are not described one by one herein again.

The communication apparatus 1600 may further include at least one memory 1630, configured to store program instructions and/or data. The memory 1630 is coupled to the processor 1620. The coupling in this embodiment of this application is an indirect coupling or a communication connection between apparatuses, units, or modules, and may be in an electrical form, a mechanical form, or another form for information exchange between the apparatuses, the units, or the modules. The processor 1620 may operate in cooperation with the memory 1630. The processor 1620 may execute a computer program or the instructions stored in the memory 1630. In a possible implementation, at least one of the at least one memory may be integrated with the processor. In another possible implementation, the memory 1630 is located outside the communication apparatus 1600.

This embodiment of this application does not define a specific connection medium between the processor 1620, the communication interface 1610, and the memory 1630. In this embodiment of this application, in FIG. 16, the memory 1630, the processor 1620, and the communication interface 1610 are connected to each other through a bus 1640. The bus is represented by a thick line in FIG. 16. A manner of connection between other parts is only schematically described, but is not used as a limitation. Buses may be classified into an address bus, a data bus, a control bus, and the like. For ease of representation, only one thick line is for representing the bus in FIG. 16, but this does not mean that there is only one bus or only one type of bus.

In a possible implementation, the communication apparatus 1600 may be a chip system. In this embodiment of this application, the chip system may include a chip, or may include the chip and another discrete component.

In this embodiment of this application, the processor 1620 may be one or more CPUs. When the processor is one CPU, the CPU may be a single-core CPU or a multi-core CPU. The processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor, any conventional processor, or the like. The steps in the methods disclosed with reference to embodiments of this application may be directly performed and completed by a hardware processor, or may be performed and completed by using a combination of hardware in the processor and a software module.

In this embodiment of this application, the memory 1630 may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any other medium that can be for carrying or storing expected program code in a form of instructions or a data structure and that can be accessed by a computer. However, this is not limited thereto. Alternatively, the memory in embodiments of this application may be a circuit or any other apparatus that can implement a storage function, and is configured to store a computer program or instructions, and/or data.

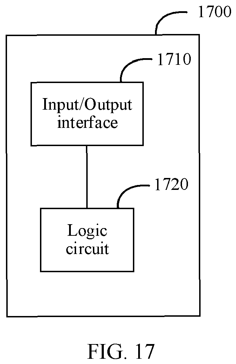

An embodiment of this application further provides an apparatus 1700. As shown in FIG. 17, the apparatus 1700 may be configured to implement functions of the apparatus 1400 or the apparatus 1500. The apparatus 1700 may be a communication apparatus or a chip in the communication apparatus. The communication apparatus includes: at least one input/output interface 1710 and a logic circuit 1720, where the input/output interface 1710 may be an input/output circuit, and the logic circuit 1720 may be a signal processor, a chip, or another integrated circuit that may implement the methods in this application.

The logic circuit is coupled to the input/output interface, and the at least one input/output interface 1710 is configured to input or output a signal or data, to perform corresponding procedures of the methods in FIG. 5 to FIG. 13.

When the foregoing communication apparatus is a chip used in a terminal, the terminal chip implements functions of the terminal in the foregoing method embodiments. The terminal chip receives information from another module (for example, a radio frequency module or an antenna) in the terminal, where the information is sent by another terminal or a network device to the terminal; or the terminal chip outputs information to another module (for example, a radio frequency module or an antenna) in the terminal, where the information is sent by the terminal to another terminal or a network device.

When the communication apparatus is a chip used in a network device, the network device chip implements functions of the network device in the foregoing method embodiments. The network device chip receives information from another module (for example, a radio frequency module or an antenna) in the network device, where the information is sent by a terminal or another network device to the network device; or the network device chip outputs information to another module (for example, a radio frequency module or an antenna) in the network device, where the information is sent by the network device to a terminal or another network device.

An embodiment of this application further provides a computer-readable storage medium. The computer-readable storage medium stores a computer program or instructions, and the computer program or the instructions are executed by a computer (for example, a processor), to implement some or all of the steps in any method performed by any apparatus in embodiments of this application.

An embodiment of this application further provides a computer program product including instructions. When the computer program product runs on a computer, some or all of the steps in any method performed by any apparatus in embodiments of this application are enabled to be performed.

A person of ordinary skill in the art may be aware that, in combination with the examples described in embodiments disclosed in this specification, units and algorithm steps can be implemented by electronic hardware or a combination of computer software and the electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes: various media that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A communication method integrated with trusted measurement, comprising:

sending, by a first network element, a first request message, wherein the first request message is for requesting to verify whether terminal device is trusted; and
receiving, by the first network element, a first response message, wherein the first response message is for verifying whether the terminal device is trusted.

**2.** The method according to claim 1, wherein the method further comprises:

receiving, by the first network element, a first reference message, wherein the first reference message comprises a trusted-attestation reference value of the terminal device, and the first reference message is for verifying whether the terminal device is trusted.

3. The method according to claim 1 or 2, wherein the method further comprises:
generating, by the first network element, the first request message.

4. The method according to claim 3, wherein the generating, by the first network element, the first request message comprises:
generating, by the first network element, the first request message in response to the first reference message.

5. The method according to any one of claims 1 to 4, wherein the first request message comprises a flag bit, and the flag bit is for triggering generation of the first response message.

6. The method according to any one of claims 1 to 5, wherein the first request message comprises a challenge value, and the challenge value is for generating the first response message.

7. The method according to claim 6, wherein the challenge value comprises a first challenge value and/or a second challenge value.

8. The method according to claim 7, wherein the first challenge value is generated by an access management network element; and/or
the second challenge value is generated by an authentication server.

9. The method according to claim 7 or 8, wherein the first challenge value and/or the second challenge value are/is any one of an authentication random number, a trusted random number, a timestamp, and a value of an agreed field.

10. The method according to claim 7 or 8, wherein the first challenge value is a first random number; and/or the second challenge value is a second random number.

11. The method according to any one of claims 8 to 10, wherein the method further comprises:

verifying, by the first network element, the first response message, wherein
the verifying, by the first network element, the first response message comprises: verifying, by the access management network element and/or the authentication server, the first response message, wherein
the first network element comprises the access management network element and/or the authentication server.

12. The method according to any one of claims 6 to 11, wherein the first response message comprises attestation information, and the attestation information is generated by the terminal device based on the challenge value.

13. The method according to claim 12, wherein the attestation information comprises a first trusted signature or a second trusted signature, the first trusted signature is a signature of first terminal device on a measurement value, and the second trusted signature is a signature of second terminal device on the first trusted signature, wherein
the terminal device comprises the first terminal device and/or the second terminal device.

14. The method according to any one of claims 6 to 11, wherein the first response message comprises an attestation result, and the attestation result comprises a result that the terminal device is verified to be trusted.

15. The method according to claim 14, wherein the attestation result comprises one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

16. A communication method integrated with trusted measurement, comprising:

receiving, by terminal device, a first request message, wherein the first request message is for requesting to verify whether the terminal device is trusted; and
sending, by the terminal device, a first response message, wherein the first response message is for verifying whether the terminal device is trusted.

17. The method according to claim 16, wherein the first request message comprises a flag bit, and the flag bit is for triggering generation of the first response message.

18. The method according to claim 16 or 17, wherein the first request message comprises a challenge value, and the challenge value is for generating the first response message.

19. The method according to claim 18, wherein the challenge value comprises a first challenge value and/or a second challenge value.

20. The method according to claim 19, wherein the first challenge value and/or the second challenge value are/is any one of an authentication random number, a trusted random number, a timestamp, and a value of an agreed field.

21. The method according to claim 19, wherein the first challenge value is a first random number; and/or
the second challenge value is a second random number.

22. The method according to any one of claims 18 to 21, wherein the first response message comprises attestation information, and the attestation information is generated by the terminal device based on the challenge value.

23. The method according to claim 22, wherein the attestation information comprises a first trusted signature or a second trusted signature, the first trusted signature is a signature of first terminal device on a measurement value, and the second trusted signature is a signature of second terminal device on the first trusted signature, wherein
the terminal device comprises the first terminal device and/or the second terminal device.

24. The method according to any one of claims 18 to 21, wherein the first response message comprises an attestation result, and the attestation result comprises a result that the terminal device is verified to be trusted.

25. The method according to claim 24, wherein the attestation result comprises one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

26. A communication method integrated with trusted measurement, comprising:
sending, by terminal device, a first response message, wherein the first response message is for verifying whether the terminal device is trusted.

27. The method according to claim 26, wherein generation of the first response message is triggered based on a timing mechanism, a counting mechanism, or an event triggering mechanism.

28. The method according to claim 26 or 27, wherein the first response message comprises attestation information, the first response message is generated by the terminal device based on a challenge value, and the challenge value is any one of an authentication random number, a trusted random number, and a timestamp.

29. The method according to claim 28, wherein the attestation information comprises a citation and a measurement log, the citation comprises a digest of the measurement log, and the measurement log comprises process information of performing trusted measurement by the terminal device.

30. The method according to claim 28 or 29, wherein the attestation information comprises a measurement value, and the measurement value is trusted-state information of the terminal device.

31. The method according to any one of claims 28 to 30, wherein the attestation information comprises a trusted signature, and the trusted signature is a signature of the terminal device on the measurement value.

32. The method according to claim 31, wherein the trusted signature comprises a first trusted signature or a second trusted signature, the first trusted signature is a signature of first terminal device on the measurement value, and the second trusted signature is a signature of second terminal device on the first trusted signature, wherein the terminal device comprises the first terminal device and/or the second terminal device.

**33.** The method according to claim 26 or 27, wherein the first response message comprises an attestation result, the attestation result comprises one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

**34.** A communication method integrated with trusted measurement, comprising:
obtaining, by a second network element, a first reference message, wherein the first reference message comprises a trusted-attestation reference value, and the first reference message is used by a first network element to verify a trusted state of terminal device.

**35.** The method according to claim 34, wherein the second network element sends the first reference message to the first network element.

**36.** The method according to claim 34 or 35, wherein the first network element is an access management network element or an authentication server, and the second network element is any one of a data management network element, an authentication credential repository and processing function network element, or an equipment identity register.

**37.** A communication apparatus integrated with trusted measurement, used in a first network element and comprising:

a sending unit, configured to send a first request message, wherein the first request message is for requesting to verify whether terminal device is trusted; and
a receiving unit, configured to receive a first response message, wherein the first response message is for verifying whether the terminal device is trusted.

**38.** The apparatus according to claim 37, wherein the receiving unit is further configured to receive a first reference message, wherein the first reference message comprises a trusted-attestation reference value of the terminal device, and the first reference message is for verifying whether the terminal device is trusted.

**39.** The apparatus according to claim 37 or 38, wherein the apparatus further comprises:
a processing unit, configured to generate the first request message.

**40.** The apparatus according to claim 39, wherein the processing unit is specifically configured to generate the first request message in response to the first reference message.

**41.** The apparatus according to any one of claims 37 to 40, wherein the first request message comprises a flag bit, and the flag bit is for triggering generation of the first response message.

**42.** The apparatus according to any one of claims 37 to 41, wherein the first request message comprises a challenge value, and the challenge value is for generating the first response message.

**43.** The apparatus according to claim 42, wherein the challenge value comprises a first challenge value and/or a second challenge value.

**44.** The apparatus according to claim 43, wherein the first challenge value is generated by an access management network element; and/or
the second challenge value is generated by an authentication server.

**45.** The apparatus according to claim 43 or 44, wherein the first challenge value and/or the second challenge value are/is any one of an authentication random number, a trusted random number, a timestamp, and a value of an agreed field.

**46.** The apparatus according to any one of claims 43 to 45, wherein the first challenge value is a first random number; and/or
the second challenge value is a second random number.

**47.** The apparatus according to any one of claims 37 to 46, wherein the processing unit is further configured to verify the first response message, wherein

the first network element comprises the access management network element and/or the authentication server.

48. The apparatus according to any one of claims 42 to 47, wherein the first response message comprises attestation information, and the attestation information is generated by the terminal device based on the challenge value.

49. The apparatus according to claim 48, wherein the attestation information comprises a first trusted signature or a second trusted signature, the first trusted signature is a signature of first terminal device on a measurement value, and the second trusted signature is a signature of second terminal device on the first trusted signature, wherein the terminal device comprises the first terminal device and/or the second terminal device.

50. The apparatus according to any one of claims 42 to 47, wherein the first response message comprises an attestation result, and the attestation result comprises a result that the terminal device is verified to be trusted.

51. The apparatus according to claim 50, wherein the attestation result comprises one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

52. A communication apparatus integrated with trusted measurement, used in terminal device and comprising:

a receiving unit, configured to receive a first request message, wherein the first request message is for requesting to verify whether the terminal device is trusted; and

a sending unit, configured to send a first response message, wherein the first response message is for verifying whether the terminal device is trusted.

53. The apparatus according to claim 52, wherein the first request message comprises a flag bit, and the flag bit is for triggering generation of the first response message.

54. The apparatus according to claim 52 or 53, wherein the first request message comprises a challenge value, and the challenge value is for generating the first response message.

55. The apparatus according to claim 54, wherein the challenge value comprises a first challenge value and/or a second challenge value.

56. The apparatus according to claim 55, wherein the first challenge value and/or the second challenge value are/is any one of an authentication random number, a trusted random number, a timestamp, and a value of an agreed field.

57. The apparatus according to claim 55 or 56, wherein the first challenge value is a first random number; and/or the second challenge value is a second random number.

58. The apparatus according to any one of claims 52 to 57, wherein the first response message comprises attestation information, and the attestation information is generated by the terminal device based on the challenge value.

59. The apparatus according to claim 58, wherein the attestation information comprises a first trusted signature or a second trusted signature, the first trusted signature is a signature of first terminal device on a measurement value, and the second trusted signature is a signature of second terminal device on the first trusted signature, wherein the terminal device comprises the first terminal device and/or the second terminal device.

60. The apparatus according to any one of claims 52 to 57, wherein the first response message comprises an attestation result, and the attestation result comprises a result that the terminal device is verified to be trusted.

61. The apparatus according to claim 60, wherein the attestation result comprises one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

62. A communication apparatus integrated with trusted measurement, used in terminal device and comprising:

a sending unit, configured to send a first response message, wherein the first response message is for verifying whether the terminal device is trusted.

63. The apparatus according to claim 62, wherein generation of the first response message is triggered based on a timing mechanism, a counting mechanism, or an event triggering mechanism.

64. The apparatus according to claim 62 or 63, wherein the first response message comprises attestation information, the first response message is generated by the terminal device based on a challenge value, and the challenge value is any one of an authentication random number, a trusted random number, and a timestamp.

65. The apparatus according to claim 64, wherein the attestation information comprises a citation and a measurement log, the citation comprises a digest of the measurement log, and the measurement log comprises process information of performing trusted measurement by the terminal device.

66. The apparatus according to claim 64 or 65, wherein the attestation information comprises a measurement value, and the measurement value is trusted-state information of the terminal device.

67. The apparatus according to any one of claims 64 to 66, wherein the attestation information comprises a trusted signature, and the trusted signature is a signature of the terminal device on the measurement value.

68. The apparatus according to claim 67, wherein the trusted signature comprises a first trusted signature or a second trusted signature, the first trusted signature is a signature of first terminal device on the measurement value, and the second trusted signature is a signature of second terminal device on the first trusted signature, wherein the terminal device comprises the first terminal device and/or the second terminal device.

69. The apparatus according to claim 62 or 63, wherein the first response message comprises an attestation result, the attestation result comprises one or more of identity information, trusted content, and freshness, the identity information indicates an identity of a verifier that verifies the terminal device to be trusted, the trusted content indicates content that is of the terminal device and that is verified to be trusted, and the freshness indicates time at which the terminal device is verified to be trusted.

70. A communication apparatus integrated with trusted measurement, used in a second network element and comprising: an obtaining unit, configured to obtain a first reference message, wherein the first reference message comprises a trusted-attestation reference value, and the first reference message is used by a first network element to verify a trusted state of terminal device.

71. The apparatus according to claim 70, wherein the apparatus further comprises: a sending unit, configured to send the first reference message to the first network element.

72. The apparatus according to claim 70 or 71, wherein the first network element is an access management network element or an authentication server, and the second network element is any one of a data management network element, an authentication credential repository and processing function network element, or an equipment identity register.

73. A communication apparatus, comprising: a processor, configured to execute computer instructions stored in a memory, to enable the apparatus to perform the method according to any one of claims 1 to 15, the method according to any one of claims 16 to 25, the method according to any one of claims 26 to 33, or the method according to any one of claims 34 to 36.

74. A computer-readable storage medium, wherein the computer-readable storage medium stores a computer program, and the computer program is executed by a computer, to implement the method according to any one of claims 1 to 15, the method according to any one of claims 16 to 25, the method according to any one of claims 26 to 33, or the method according to any one of claims 34 to 36.

75. A computer program product, wherein the computer program product comprises computer program code; and when the computer program code is run on a computer, the method according to any one of claims 1 to 15, the method according to any one of claims 16 to 25, the method according to any one of claims 26 to 33, or the method according to any one of claims 34 to 36 is performed.

76. A chip, comprising a processor, configured to read instructions stored in a memory, wherein when the processor executes the instructions, the chip is enabled to implement the method according to any one of claims 1 to 15, the method according to any one of claims 16 to 25, the method according to any one of claims 26 to 33, or the method according to any one of claims 34 to 36.

77. A communication system, comprising terminal device, a first network element, and a second network element, wherein the first network element is configured to perform the method according to any one of claims 1 to 15, the terminal device is configured to perform the method according to any one of claims 16 to 25 or the method according to any one of claims 26 to 33, and the second network element is configured to perform the method according to any one of claims 34 to 36.

FIG. 1

Application network element 1130 — Naf
Data management network element 1120 — Nudm
Policy control network element 1110 — Npcf
Network repository network element 1100 — Nnrf
Network exposure network element 190 — Nnef
Slice function network element 180 — Nnssf
Nsmf — Session management network element 170
Namf — Access management network element 160
Nausf — Authentication server 150
Session management network element 170 — N4 — User plane network element 130
User plane network element 130 — N6 — Data network 140
Access management network element 160 — N2 — (Radio) access network network element 120
Access management network element 160 — N1
(Radio) access network network element 120 — N3 — User plane network element 130
(Radio) access network network element 120 — Terminal equipment 110

FIG. 2

FIG. 3

Terminal equipment | AMF | AUSF | UDM

S410: Generate an authentic vector

S420: First authentic vector

S430: Update the authentic vector

S440: Second authentic vector

S450: Authentication request information

S460: Perform an authentication process

S470: Authentication response information

S480: Authentication response information

FIG. 4

Terminal equipment | First network element

S510: First request message

S520: First response message

FIG. 5

Terminal
equipment

First network
element

S610: Generate a first
response message

S620: First response
message

S630: Verify the first
response message

FIG. 6

Terminal equipment

USIM

ME

Core network
element

S710: Challenge
request message

S720: Sign

S730: First
attestation
information

S740: Sign

S750: Second
attestation
information

S760: Challenge
response message

FIG. 7

```
        ┌──────────┐              ┌──────────────┐
        │    ME    │              │ Core network │
        │          │              │   element    │
        └────┬─────┘              └──────┬───────┘
             │                           │
             │  S810: Challenge          │
             │◄───request message────────│
             │                           │
        ┌────┴─────┐                     │
        │S820: Sign│                     │
        └────┬─────┘                     │
             │                           │
             │  S830: Challenge          │
             │──response message────────►│
             │                           │
             │                           │
```

FIG. 8

```
┌──────────┐       ┌──────┐       ┌──────┐              ┌──────┐
│ Terminal │       │ AMF  │       │ AUSF │              │ UDM  │
│equipment │       │      │       │      │              │      │
└────┬─────┘       └──┬───┘       └──┬───┘              └──┬───┘
     │                │              │        ┌────────────┴──────────┐
     │                │              │        │S910: Generate trusted-│
     │                │              │        │ reference information  │
     │                │              │        └────────────┬──────────┘
     │                │              │   S920: Trusted-      │
     │                │              │◄────reference─────────│
     │                │              │    information        │
     │                │  S930: Trusted-                      │
     │                │◄──reference──│                       │
     │                │   information│                       │
     │          ┌─────┴────────────┐ │                       │
     │          │S940: Generate a  │ │                       │
     │          │challenge request │ │                       │
     │          │    message       │ │                       │
     │          └─────┬────────────┘ │                       │
     │  S950: Challenge              │                       │
     │◄──request message─────────────│                       │
┌────┴────────────────┐              │                       │
│S960: Generate a      │             │                       │
│challenge response    │             │                       │
│     message          │             │                       │
└────┬────────────────┘              │                       │
     │  S970: Challenge              │                       │
     │──response message────────────►│                       │
     │          ┌─────┴────────────┐ │                       │
     │          │S980: Verify the  │ │                       │
     │          │challenge response│ │                       │
     │          │     message      │ │                       │
     │          └─────┬────────────┘ │                       │
     │                │ S990: Attestation                    │
     │                │──   result   ──►                      │
     │                │              │                       │
```

FIG. 9

FIG. 10

FIG. 11

FIG. 12

FIG. 13

FIG. 14

Apparatus 1500

Sending unit 1510

Receiving unit 1520

Processing unit 1530

FIG. 15

Apparatus 1600

1610

Transceiver

1620

Processor

1640

1630

Memory

FIG. 16

FIG. 17

## INTERNATIONAL SEARCH REPORT

| International application No. |
| --- |
| **PCT/CN2022/140938** |

**A. CLASSIFICATION OF SUBJECT MATTER**

H04W 12/06(2021.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; VEN; WPABSC; ENTXTC; WPABS; ENTXT; WOTXT; CNKI; 3GPP: 终端, 身份, 验证, 认证, 鉴权, 签名, 随机数, 可信, 接入管理, 认证服务, 挑战, UE, RAND, AUSF, AMF, UDM, EIR, USIM, ME, signature, authenticate, authorize, challenge

**C. DOCUMENTS CONSIDERED TO BE RELEVANT**

| Category* | Citation of document, with indication, where appropriate, of the relevant passages | Relevant to claim No. |
| --- | --- | --- |
| X | CN 110035433 A (HUAWEI TECHNOLOGIES CO., LTD.) 19 July 2019 (2019-07-19) description, paragraphs [0150]-[0558], and figures 1-14 | 1-77 |
| X | CN 112087753 A (HUAWEI TECHNOLOGIES CO., LTD.) 15 December 2020 (2020-12-15) description, paragraphs [0053]-[0339], and figures 5-11 | 1-77 |
| X | CN 111669276 A (HUAWEI TECHNOLOGIES CO., LTD.) 15 September 2020 (2020-09-15) description, paragraphs [0043]-[0225], and figures 1B-6 | 1-77 |
| X | CN 112512045 A (HUAWEI TECHNOLOGIES CO., LTD.) 16 March 2021 (2021-03-16) description, paragraphs [0088]-[0226], and figures 1-15 | 1-77 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 February 2023** | **14 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/140938**

| Patent document cited in search report | | | Publication date (day/month/year) | Patent family member(s) | | | Publication date (day/month/year) |
|---|---|---|---|---|---|---|---|
| CN | 110035433 | A | 19 July 2019 | EP | 3737133 | A1 | 11 November 2020 |
| | | | | US | 2020344604 | A1 | 29 October 2020 |
| CN | 112087753 | A | 15 December 2020 | None | | | |
| CN | 111669276 | A | 15 September 2020 | None | | | |
| CN | 112512045 | A | 16 March 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210011098